Europäisches Patentamt

European Patent Office

Office européen des brevets

(19)

(11) EP 1 536 355 A1

(12) EUROPEAN PATENT APPLICATION
published in accordance with Art. 158(3) EPC

(43) Date of publication:
01.06.2005 Bulletin 2005/22

(51) Int Cl.$^7$: G06F 17/60

(21) Application number: 03736259.7

(86) International application number:
PCT/JP2003/008115

(22) Date of filing: 26.06.2003

(87) International publication number:
WO 2004/010358 (29.01.2004 Gazette 2004/05)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 19.07.2002 JP 2002211230

(71) Applicant: Japan Industrial Technology
Association
Minato-ku, Tokyo 105-0001 (JP)

(72) Inventors:
• ISHIMARU, Kimio,
Japan Ind. Techn. Ass. AIST Innov
Minato-ku, Tokyo 105-0001 (JP)
• KANAMORI, Takashi,
Japan Ind Techn Ass AIST Innov
Minato-ku, Tokyo 105-0001 (JP)
• MIYABE, Nobuo, Japan Ind. Techn. Ass. AIST
Innov.
Minato-ku, Tokyo 105-0001 (JP)

(74) Representative: Vinsome, Rex Martin
Urquhart-Dykes & Lord LLP
St Nicholas Chambers,
Amen Corner
Newcastle-Upon-Tyne NE1 1PE (GB)

(54) STUDY/DEVELOPMENT INVESTMENT SECURITIES SALES METHOD

(57) A study/development is objectively evaluated for introduction of share for investors so as to provide an investment chance to the study/development and pay dividend. A processing unit reads in study plan information, study result information, study cost balance information, and expected result information for each of the study theme identification information from a storage unit (S101 to S109). According to each study theme identification information, the processing unit calculates a total investment sum A up to now and future study investment sum B (S111). The processing unit calculates an expected implementation income H and a risk coefficient I (S113). The processing unit calculates a profit index R predicting probability of industrialization of the study theme and obtaining profit and ranks the profit index (S115). The processing unit stores study theme information including various information associated with study/development (S117). The processing unit creates an investment set by selecting a plurality of study themes of the same or similar study groups (S121) and discloses information on introduction of share for the investment set via a communication network (S123).

FIG. 7

**Description**

Technical Field

The present invention relates to research-and-development investment securities selling methods, research-and-development investment securities selling systems, research-and-development investment securities selling programs, and recording media having stored thereon the programs, all for investing in research and development.

Background Art

Generally, a risk accompanies research and development, and a great amount of expenditure is required for creating a landmark product. Therefore, it may be difficult in some cases for a company itself to perform research and development with a long-term target. There have been cases, for example, in which a public organization develops a basic technology and a private company reduces it to practice. If a private company reduces a result of a research organization into practice with the use of funds of private investors, it is expected that a new industry is formed.

To increase the rate of success in research and development, it is necessary that the final target be definite and a series of research and development be combined. Research and development should be performed with these relationships being made definite. To this end, it is urgently demanded that needs and seeds be found, matching be found between them, and research-and-development funds be obtained.

New businesses which include selling securities and goods by the use of personal computers and networks have been emerging due to the progress of communication networks such as the Internet.

Disclosure of Invention

Private investors want to have a chance to make investment in promising research and development in addition to investment in venture companies. However, it is difficult to evaluate technical seeds which serve as the base of research themes, and it is also difficult to select a research theme in which research investment is made. Therefore, an issue is how to provide investors with objective evaluation information about research and development. Other issues include how to release the certificate of investment made in research and development, and how to determine investment dividends.

The present invention has been made in consideration of the above-described points, and an object thereof is to provide a research-and-development investment securities selling method, a research-and-development investment securities selling system, a research-and-development investment securities selling program, and a recording medium having stored thereon the program, all for implementing processes and procedures in a research-investment intermediary organization which organically connects research-and-development organizations and private investors. Another object of the present invention is to provide chances for making investment in research and development by evaluating research themes objectively and disclosing the evaluation to private investors. Still another object of the present invention is to sell research-and-development investment securities to make investment definite and to collect research-and-development funds. Yet another object of the present invention is to manage a research money and the amounts of investments for research and development to pay investment dividends according to the amounts of investments.

According to the present invention, means for solving the above-described issues by disclosing research themes, by selling research-and-development investment securities, and by paying dividends is provided.

(Research-theme disclosure)

A research-and-development investment securities selling system calculates a profit index from the expense and income estimates of a research theme and others. The research-and-development investment securities selling system calculates the total research investment (A) up to now and future research investment (B) as expenses for the research theme. The research-and-development investment securities selling system reads a research man-hour value, which indicates the number of persons who are involved in the research, a unit labor cost, a research-them expense and facility expense, and a joint-research expense from a data base to perform calculations according to the following equations.

$$A = (\text{research man-hour value}) \times (\text{unit labor cost}) +$$

$$(\text{research-theme expense}) + (\text{facility expense}) + (\text{joint-research}$$

expense)

$$B = (research\ budget) - A$$

where, the research-theme expense includes, for example, ordered-member cost which includes material cost and machining cost, consumables cost, and prototype-production cost, and the joint-research expense includes, for example, research money obtained from an external research organization or an external company. When the joint-research expense has no data, it may be included in items such as the research-theme expense, the facility expense, and the labor cost.

As income estimates for the research theme, there are an income estimate (F) for an information disclosure charge obtained by an information disclosure contact which discloses research-result information to a company, an income estimate (G) for an optional charge obtained by an optional contract which provides a company with research results within a limited period before a reduction-to-practice contract is made, and an income estimate (H) for a license fee obtained by making a reduction-to-practice contract with a company for a research theme to which a patent has been grated. A patent has not necessarily been obtained for a research theme, and a research theme to which a patent is not granted may be used. The research-and-development investment securities selling system reads the income estimate F for an information disclosure charge and the income estimate G for an optional charge from a data base. The income estimate F for an information disclosure charge is basically set so as to fall in a range of 1% to 50$ of the total research investment A up to now. If a sales estimate (C) or a market value (D) is more than 50% of the total research investment A, the income estimate F for an information disclosure charge may be changed to be equal to the market value. The research-and-development investment securities selling system calculates the license fee income estimate H from the sales estimate C, a royalty estimate (r), and a lump-sum-payment estimate (Ls) according to the following equation.

$$H = C \times r + Ls$$

where, the royalty estimate r is the estimated value of royalty (license fee rate) specified when a reduction-to-practice contract is made with a company, and the lump-sum-payment estimate Ls is the estimated amount of a contract money obtained when a reduction-to-practice contract is made with a company. The research-and-development investment securities selling system calculates a risk coefficient I from these expense and income estimates according to the following equation.

$$I = (A + B)/(F + G + H)$$

Further, the research-and-development investment securities selling system calculates a profit index R used for ranking the research theme according to the following equation.

$$R = E \times D/I$$

where, E indicates a success probability, D indicates the market value, and I indicates the risk coefficient.
The success probability E is an estimated probability at which the research theme is reduced to business and a profit is obtained. The research-and-development investment securities selling system uses the obtained profit index R to rank the research theme, for example, with five-level profit-index ranks 1 to 5. The five-level ranks 1 to 5 is just an example, and the number of ranks is not limited to five. The research-and-development investment securities selling system performs the above-described process for all research themes.

Then, the research-and-development investment securities selling system selects a plurality of research themes belonging to an identical research group from the ranked research themes to generate a research-and-development investment set. The research themes are grouped in advance into research groups in technical fields such as communications and electronic components, and the research groups are stored in a data base in association with the research themes. The research-and-development investment securities selling system first classifies the ranked research themes into research groups. The research-and-development investment securities selling system selects two research themes from research themes having each of profit-index ranks of 1 to 5 in an identical research group to generate a research-and-development investment set having a total of 10 themes. The research-and-development investment securities selling system generates as many research-and-development investment sets as possible in the research group. The research-and-development investment securities selling system performs the same process for the other research groups. The number of themes to be selected can be set to an appropriate number.

The research-and-development investment securities selling system stores 10 pieces of research-theme information belonging to a generated research-and-development investment set, an investment-set ID, and the research group in a data base and discloses them to investors through a communication network such as the Internet. The investment-set ID is an identification used to identify the research-and-development investment set, and can be a numeral, a letter, a symbol, or any appropriate thing. Means for disclosure may be recording media, indications, printed materials, bulletin boards, mailing, broadcasting, and others, in addition to communication networks. Research-theme information to be disclosed includes, for example, the research themes, the research group, a research period, a joint-research partner, a research target, a research budget, patent applications, presentations in an academic society, a business sales estimate (C), a market value (D), a success probability (E), a risk coefficient (I), a business plan, a business balance estimate (J), a dividend estimate (K), a profit index (R), and a profit-index rank (Br). The research-theme information to be disclosed may include the total research-and-development investment (A) up to now, future research investment (B), an income estimate (F) for an information disclosure charge, an income estimate (G) for an optional charge, a license fee income estimate (H), and others.

(Selling research-and-development investment securities)

When an investor subscribes for investment to a disclosed research-and-development investment set, the research-and-development investment securities selling system sells a research-and-development investment security. The subscription is received and the security is sold through a communication network such as the Internet. The investor selects a research-and-development investment set in which investment is made with the use of disclosed information, and sends information required for investment from an investor terminal to the research-and-development investment securities selling system according to an investment subscription form or others. The investor fills in information necessary for investor registration or for investment on the investment subscription form and sends it.

Investor registration is performed to an investor who makes first investment. The research-and-development investment securities selling system receives information required for investor registration, such as the investor name, address, telephone number, e-mail address, payment method, and others, from the investment subscription form. The research-and-development investment securities selling system gives an investor ID and a password to the investor whose investor information has been received. The research-and-development investment securities selling system also stores the investor ID, the password, and the investor information received from the investor into an investment-information data base.

When an investor who has performed investor registration subscribes for investment, the research-and-development investment securities selling system receives the investor ID and the password from the investment subscription form, and authenticates the investor. When the investor is not successfully authenticated, the research-and-development investment securities selling system again receives the investor ID and the password, and performs authentication processing. Investor registration is first performed for an investor who has not performed investor registration. When the investor is successfully authenticated, the research-and-development investment securities selling system receives the investment-set ID in which investment is to be made and the amount of investment, and further stores the investment-set ID, the amount of investment, and the investment period to the investment information corresponding to the investor ID in the investment-information data base.

Further, the research-and-development investment securities selling system issues a research-and-development investment security corresponding to the amount of investment, and sells it to the investor. The research-and-development investment securities selling system subtracts the handling charge of a research-and-development-investment intermediary organization from the fund obtained by selling the research-and-development investment security and distributes the difference to the 10 research themes belonging to the research-and-development investment set as research fund. The research-and-development investment securities selling system can use any appropriate distribution method to distribute the fund to each research theme, such as uniform distribution, and distribution based on the research budget. The research fund distributed to each research theme is added to the total investment distribution (At) made by investors stored in a research-money-balance data base.

(Dividend)

The research-and-development investment securities selling system distributes a profit obtained from the result of a research theme to investors, a research organization, a reduction-to-practice company, and a research-and-development investment intermediary organization. Dividends are paid at an appropriate time specified by the research-and-development investment intermediary organization. Since each research theme has a different research organization, a different reduction-to-practice company, and a different income form, income and dividends are calculated for each research theme. A dividend to each investor is obtained by distributing the total dividends to all investors obtained from the 10 themes belonging to a research-and-development investment set, according to the amounts of investment made by the investors.

For example, there are the following two types of income obtained from the result of research and development according to the forms of reduction to practice of a technology.

1. Research-and-development consideration income obtained by transferring the technology from the research-and-development professional organization to a reduction-to-practice organization
2. Business-income dividend obtained from a business based on the research and development

The research-and-development consideration income includes information disclosure income (LA) obtained when research-result information is disclosed to a reduction-to-practice company, optional-contract income (LB) obtained by making an experimental reduction-to-practice contract with a reduction-to-practice company for a specified period, and license fee income (LC) obtained by making a reduction-to-practice contract. These items of income are stored in the research-money-balance data base when a technology transfer contract is made or when the accounts of a company is settled, and managed.

The whole consideration L for research and development, which is the total amount of research-and-development consideration income obtained when technology transfer is made to a reduction-to-practice organization, is obtained by the following equation.

$$L = LA + LB + LC$$

In a business based on research and development, a part of a business-income profit P serves as dividends. The research-and-development investment securities selling system calculates a business-income dividend X from a business-income-profit dividend rate (Q) specified in advance, according to the following equation.

$$X = P \times Q$$

The research-and-development investment securities selling system determines a dividend to each organization according to the following calculations. When the research-and-development investment intermediary organization transfers a technology to a reduction-to-practice organization, the whole consideration L for research and development is distributed to the research-and-development-investment intermediary organization, to the research organization, and to all investors.

Dividend Dt to the research-and-development-investment intermediary organization = $L \times Y$

Dividend Dr to the research organization = $L \times (1 - Y) \times ((A - At)/A)$

$$\text{Dividend Di to all investors} = L \times (1 - Y) \times (At/A)$$

where, L indicates the whole consideration for research and development, Y indicates the distribution rate for the research-and-development-investment intermediary organization, At indicates the total investment distribution made by investors, and A indicates the total research investment A up to now.

The dividend to the research-and-development-investment intermediary organization means a distribution for the intermediary operation performed by the research-and-development-investment intermediary organization to technology-transfer the research result to the reduction-to-practice organization.

In a business based on research and development, the research-and-development investment securities selling system calculates dividends to all investors among the business-income dividend according to the following equation.

$$\text{Dividend Di to all investor} = X \times At/A$$

where, X indicates the business-income dividend, At indicates the total amount of investment made by investors, and A indicates the total research investment to the research theme. From the business-income dividend X, the charge for the research-and-development-investment intermediary organization and the dividend to the research organization are paid, and the remaining serves as a business profit.

The research-and-development investment securities selling system stores the calculated dividend Dt to the research-and-development-investment intermediary organization, the calculated dividend Dr to the research organization, and the calculated dividend Di to all investors in the research-money-balance data base. The research-and-development investment securities selling system performs the above-described process for all research themes.

Further, the research-and-development investment securities selling system distributes the dividends to all investors to each investor according to the amount of investment of the investor. Since each investor has invested in a research-and-development investment set having 10 themes, a dividend to each investor is paid in units of research-and-development investment sets. The research-and-development investment securities selling system first obtains the total amount S of dividends to all investors for the 10 research themes belonging to the research-and-development investment set. The research-and-development investment securities selling system also obtains the total amount Ts of investment made by all the investors who has invested in the research-and-development investment set. The research-and-development investment securities selling system obtains a dividend to one investor from the total amount S of dividends to all investors, the total amount Ts of investment made by all the investors, and the amount T of investment made by the investor, according to the following equation.

$$\text{Dividend to one investor} = S \times T/Ts$$

The calculated dividend to the investor is stored in the investment information corresponding to the investor ID in the investment-information data base. A dividend to each investor is calculated for all the investors who have invested in the research-and-development set.

The above-described process is performed for all research-and-development sets. An investment method for research-and-development investment sets have been described. Investment can be made in an individual research theme.

According to first solving means of the present invention, a research-and-development securities selling method including:

a step in which a processing section reads each information corresponding to research-theme identification information from a storage section having stored for each research-theme identification information, research-plan information which includes research-group identification information and research-budget information, research-result information which includes patent information or academic-society-presentation information, research-money-balance information which includes income information and expense information related to the research theme, and expected-result information which includes, income-estimate information other than that of a license fee, the market-value information D of a research target, success-probability information E, and income estimate information;

a step in which the processing section calculates a total research investment A up to now according to the expense information recorded in the research-money-balance information read from the storage section, according to each research-theme identification information;

a step in which the processing section calculates future research investment B by subtracting the total research investment A from the research-budget information recorded in the research-plan information read from the storage section, according to each research-theme identification information;

a step in which the processing section calculates a license fee income estimate H according to the income-estimate information recorded in the expected-result information, according to each research-theme identification information;

a step in which the processing section calculates a risk coefficient I according to the ratio of the amount of expenses which includes the total research investment A and the future research investment B to the amount of income which includes the license fee income estimate H and the income-estimate information other than that of the license fee recorded in the expected-result data, for each research-theme identification information;

a step in which the processing section obtains a profit index R indicating an estimated probability of obtaining a profit when a research theme is reduced to business, according to the ratio of the market-value information D and the success-probability information E recorded in the expected-result information to the risk coefficient I, for each research-theme identification information;

a step in which the processing section ranks a profit-index rank according to the value of the profit index R, for each research-theme identification information; and

a step in which the processing section stores research-theme information which includes the total research investment A, the future research investment B, the risk coefficient I, the profit-index rank, and the research-result information in a research-theme data base in association with the research-theme identification information and discloses the research-theme information through a communication network,

and a research-and-development securities selling program which makes a computer execute each of the above-described steps, and a computer-readable recording medium having the program stored thereon are provided.

According to second solving means of the present invention, a research-and-development securities selling method including:

a step in which a processing section reads each information corresponding to research-theme identification information from a storage section having stored for each research-theme identification information, research-plan information which includes research-group identification information and research-budget information, research-result information which includes patent information or academic-society-presentation information, research-money-balance information which includes income information and expense information related to the research theme, and expected-result information which includes, income-estimate information other than that of a license fee, the market-value information D of a research target, success-probability information E, and income estimate information;

a step in which the processing section calculates a total research investment A up to now according to the expense information recorded in the research-money-balance information read from the storage section, according to each research-theme identification information;

a step in which the processing section calculates future research investment B by subtracting the total research investment A from the research-budget information recorded in the research-plan information read from the storage section, according to each research-theme identification information;

a step in which the processing section calculates a license fee income estimate H according to the income-estimate information recorded in the expected-result information, according to each research-theme identification information;

a step in which the processing section calculates a risk coefficient I according to the ratio of the amount of expenses which includes the total research investment A and the future research investment B to the amount of income which includes the license fee income estimate H and the income-estimate information other than that of the license fee recorded in the expected-result data, for each research-theme identification information;

a step in which the processing section obtains a profit index R indicating an estimated probability of obtaining a profit when a research theme is reduced to business, according to the ratio of the market-value information D and the success-probability information E recorded in the expected-result information to the risk coefficient I, for each research-theme identification information;

a step in which the processing section ranks a profit-index rank according to the value of the profit index R, for each research-theme identification information;

a step in which the processing section stores research-theme information which includes the total research investment A, the future research investment B, the risk coefficient I, the profit-index rank, and the research-result information in a research-theme data base in association with the research-theme identification information;

a step in which the processing section generates an investment set by selecting a predetermined plurality of pieces of research-theme identification information in an identical research group or similar research groups according to the research-group identification information recorded in the research-plan information read from the storage section, and stores disclosure information which includes the research-group identification information, the plurality of pieces of research-theme identification information, and a plurality of pieces of research-theme information in association with investment-set identification information; and

a step in which the processing section discloses the disclosure information read from the disclosure-information data base through a communication network,

and a research-and-development securities selling program which makes a computer execute each of the above-described steps, and a computer-readable recording medium having the program stored thereon are provided.

According to third solving means of the present invention, a research-and-development securities selling method including:

a step in which a processing section reads each information corresponding to research-theme identification information from a storage section having stored, for each research-theme identification information, research-money-balance information which includes income information and expense information related to a research them, the total research investment A, and the total At of investment distributions made by investors;

a step in which the processing section reads each information corresponding to investor identification information from investment-information data base having stored, for each investor identification information, investment-content information which includes the identification information of a research theme in which investment is to be made

and the amount of investment;

a step in which the processing section calculates the total investment Ts made by investors for the identification information of each research theme to which a profit is to be distributed, according to the investment-content information read from the investment-information data base correspondingly to the investor identification information;

a step in which the processing section distributes, to research-theme identification information, the whole consideration L for research and development and/or a business income profit P included in the income information recorded in the research-money-balance information read from the storage section, according to the ratio of the total At of investment distributions or the total investment Ts to the total research investment A, and calculates dividends to all investors for the research-theme identification information;

a step in which the processing section stores the calculated dividends to all investors in association with the research-theme identification information in the storage section; and

a step in which the processing section distributes the dividends to all investors read from the storage section to each investor identification information according to the amount of investment corresponding to the investor identification information read from the investment-information data base, and stores the distributed dividend in the investment-information data base correspondingly to each investor identification information,

and a research-and-development securities selling program having a computer execute each of the above-described steps, and a computer-readable recording medium having stored thereon the program are provided.

According to fourth solving means of the present invention, a research-and-development securities selling method including:

a step in which a processing section reads each information corresponding to research-theme identification information from a storage section having stored, for each research-theme identification information, research-money-balance information which includes income information and expense information related to a research them, the total research investment A, and the total At of investment distributions made by investors;

a step in which the processing section reads each information corresponding to investor identification information from investment-information data base having stored, for each investor identification information, investment-content information which includes the identification information of a research theme in which investment is to be made and the amount of investment;

a step in which the processing section reads each information corresponding to the investment-set identification information from disclosure-information data base having stored disclosure information which includes research-group identification information, a plurality of pieces of research-theme identification information, and a plurality of pieces of research-theme information for the investment-set identification information;

a step in which the processing section calculates the total investment Ts made by investors for the each investment set identification information to which a profit is to be distributed, according to the investment-content information read from the investment-information data base correspondingly to the investor identification information, and the disclosure information read from the disclosure-information data base;

a step in which the processing section distributes, to each research-theme identification information included in an investment set specified by the investment-set identification information according to information read from the investment-information data base, the whole consideration L for research and development and/or a business income profit P included in the income information recorded in the research-money-balance information read from the storage section and the total research investment A according to the ratio of the total At of investment distributions or the total investment Ts to the total research investment A, and calculates dividends to all investors for the research-theme identification information;

a step in which the processing section stores the calculated dividends to all investors in association with each research theme included in the investment set, in the storage section;

a step in which the processing section totals the dividends to all investors for all research themes included in the investment set according to information read from the storage section to obtain the total amount S of dividends to investors for the investment-set identification information;

a step in which the processing section obtains a dividend to each investor from the total amount S of dividends to all investors according to the ratio of the amount T of investment of the investor identification information to the total investment Ts made by all investors, for each investment set; and

a step in which the processing section stores the calculated dividend to each investor in the investment-information data base corresponding to the investor identification information in the investment-information data base,

and a research-and-development securities selling program having a computer execute each of the above-described steps, and a computer-readable recording medium having stored thereon the program are provided.

Brief Description of the Drawings

Fig. 1 is a hardware structural view of a research-and-development investment securities selling system.

Fig. 2 shows the formats of a research-plan data base, a research-result data base, and an expected-result data base.

Fig. 3 is a view showing the format of research-money-balance information stored in a research-money-balance data base.

Fig. 4 is a view showing the format of investment information stored in an investment-information data base.

Fig. 5 is a view showing the format of research-theme information stored in a research-theme-information data base.

Fig. 6 is a view showing the format of disclosure information stored in a disclosure-information data base.

Fig. 7 is a flowchart of processing for disclosing research-theme information according to a first embodiment.

Fig. 8 is a flowchart of processing for selling research-and-development investment securities according to the first embodiment.

Fig. 9 is a flowchart of processing for calculating dividends according to the first embodiment.

Fig. 10 is a view showing the format of investment information stored in an investment-information data base used when securities are sold for each research theme.

Fig. 11 is a flowchart of processing for disclosing research-theme information, used when securities are sold for each research theme.

Fig. 12 is a flowchart of processing for selling research-and-development investment securities, used when the securities are sold for each research theme.

Fig. 13 is a flowchart of processing for calculating dividends, used when securities are sold for each research theme.

Best Mode for Carrying Out the Invention

1. Outline of research-and-development investment securities sales

In embodiments of the present invention, as research-and-development investment methods, methods for selling research-and-development investment securities to investors and selling systems thereof will be described. When investors invest in research and development, it is necessary to evaluate research themes definitely and to disclose the evaluation. An investment dividend method also needs to be established. In embodiments of the present invention, as an example, a research-and-development investment intermediary organization plays these roles. A research-and-development investment securities selling system used by the research-and-development investment intermediary organization plays, for example, the following roles when research-and-development investment securities are sold.

- Managing research-plan data and research-result data of research performed in research organizations and companies
- Evaluating research themes in which research investment is made, objectively, and disclosing research information to investors
- Selling research-and-development investment securities to investors and managing investment information
- Distributing income obtained from research results
- To widely technology-transfer research results, making a reduction-to-practice contract or a joint-research contract with companies
- Providing a mechanism to attract investment in research themes having a high risk and a low success probability Research themes in embodiments of the present invention can have any scale. A research theme handled by only one researcher, and a research project having a plurality of researcher may be included.

The research-and-development investment securities selling system performs research evaluation such as a market value and an income estimate obtained when a research result is reduced to business, for research-theme and research-plan information received from a research organization. In embodiments of the present invention, the research-and-development investment securities selling system calculates profit indexes from income estimates, the amounts of investment, and others as research-theme evaluation values, and ranks research themes, for example, with five-level profit-index ranks 1 to 5 according to the profit indexes. The research-and-development investment securities selling system generates research-theme information which includes research plans, research results, and research evaluation, used for investment determination data, and discloses the information to investors. The research-and-development investment securities selling system stores all of these pieces of information in predetermined data bases.

As a feature of a first embodiment, a research-and-development investment securities selling system generates research-and-development investment sets each having a plurality of research themes ranked according to profit indexes, and discloses the information thereof, sells securities thereof, and distributes investment thereto for each of the research-and-development investment sets. Research and development in an identical field may have mutual relationship. Successful achievements of a plurality of pieces of research possibly creates a new landmark product to find a new market. Therefore, when research funds are collected for a plurality of research themes in an identical field, it is possible to manage to find a new market. It also has an advantage that research funds can be given to a theme usually having a high risk and a low success probability. In addition, with the use of research-and-development investment sets for each fields, inventors can easily select an investment object and can avoid a risk. In a second embodiment, investment is directly made in research themes, not in research-and-development investment sets.

2. Hardware configuration of the first embodiment

In the first embodiment, research-and-development investment securities are sold for research-and-development investment sets each having a plurality of research themes.

(System configuration)

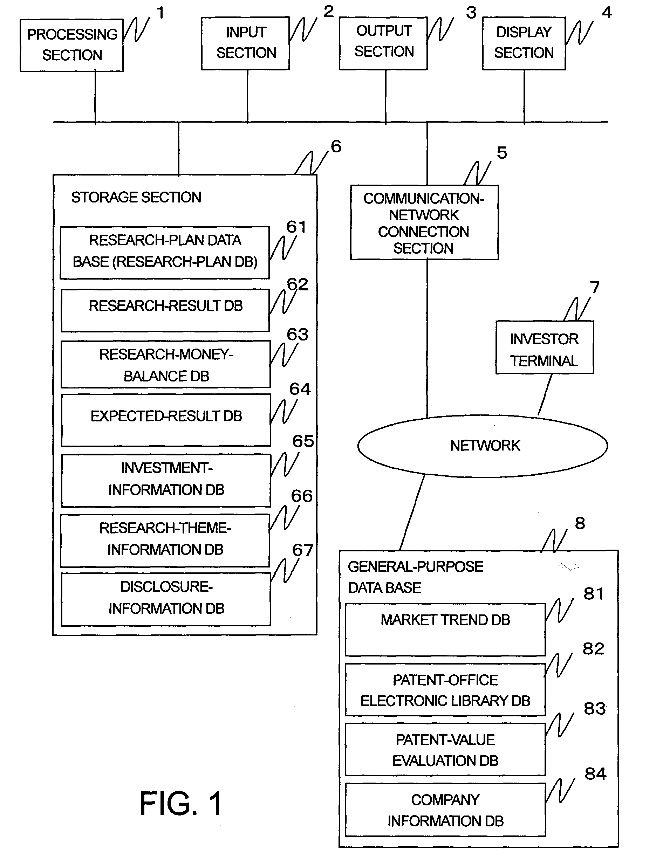

Fig. 1 is a view showing the hardware configuration of a research-and-development investment securities selling system.

The system is provided with a processing section (CPU) 1, an input section 2, an output section 3, a display section 4, a communication-network connection section 5, and a storage section 6. The communication-network connection section 5 is used to connect to a communication network such as the Internet. A communication network to be connected may be any network other than the Internet. The storage section 6 includes a research-plan data base (research-plan DB) 61, a research-result DB 62, a research money balance DB 63, an expected result DB 64, an investment information DB 65, a research-theme information DB 66, and a disclosure information DB 67. In addition, the system is provided with an investor terminal 7 and a general-purpose data base 8 both connected to a network to which the communication-network connection section 5 is connected. The general-purpose data base 8 includes a market trend DB 81, a Patent-Office Electronic Library DB 82, a patent-value evaluation DB 83, and a company information DB 84. In the system, the general-purpose data base 8 can be referred to, or can be downloaded to the storage section 6.

(Data-base file configuration)

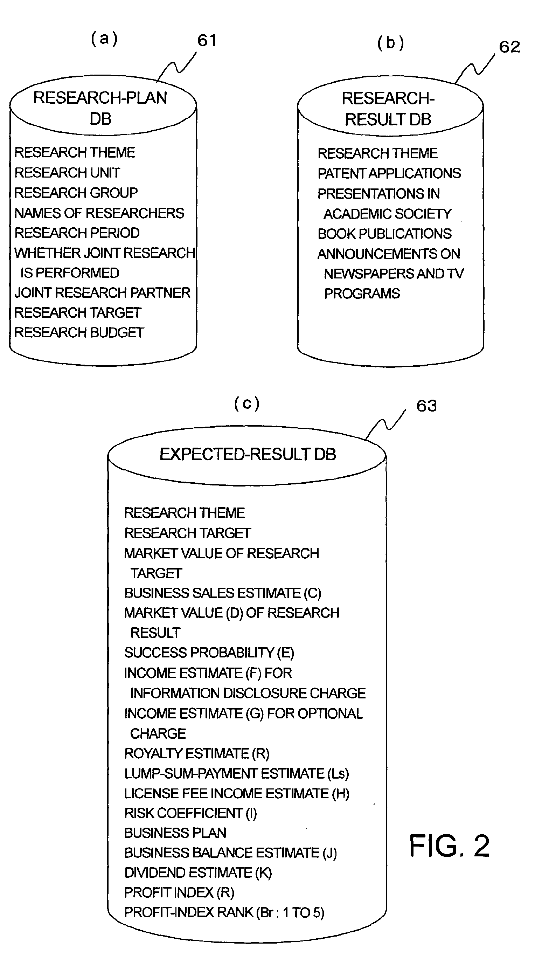

Fig. 2 is a view showing the formats of the research-plan data base, the research-result data base, and the expected-result data base.

<Research-plan DB>

Fig. 2(a) is a view showing the format of research-plan information stored in the research-plan DB 61.

The research-plan DB 61 stores information related to each research plan, such as a research target, a research budget, and a researcher organization, in association with the corresponding research theme. The stored information includes, for example, the research theme, a research unit, a research group, the names of researchers, a research period, whether joint research is performed, a joint research partner, the research target, and the research budget. The research budged may be stored as items such as a research expense, and a facility expense.

<Research-result DB>

Fig. 2(b) is a view showing the format of research-result information stored in the research-result DB 62.

The research-result DB 62 stores information related to patent applications and presentations at academic meetings for the result obtained by the research and development, in association with the corresponding research theme. The stored information includes, for example, the research theme, patent-application information, information on presentations in a society, and information on book publications and announcements on various media, such as newspapers and TV programs. As the patent-application information, the applicant, the share of the research institute, the inventor, the joint inventor, the share of the joint inventor, the abstract, the main figure, and so on can be stored. As the information on presentations in a society, the paper, the name of the society where a presentation was held, the date, the manuscript, and so on can be stored. In addition to the society, presentations at research meetings and symposiums may be stored.

<Expected-result DB>

Fig. 2(c) is a view showing the format of expected-result information stored in the expected-result DB 63.

The expected-result DB 63 stores the market value and income estimate obtained when a research result is used in business. The stored information includes, for example, the research theme, the research target, the market values (five-level evaluation of the value, market information, and TRRU (trademark) evaluation such as that performed by the pl-x corporation) of the research target, a business sales estimate (C), the market value (D) of the research result, a success probability (E), an income estimate (F) for an information disclosure charge, an income estimate (G) for an optional charge, a royalty estimate (r), a lump-sum-payment estimate (Ls), a license fee income estimate (H), a risk coefficient (I), a business plan, a business balance estimate (J), a dividend estimate (K), a profit index (R), and a profit-index rank (Br).

Each of these items will be described below.

- The success probability E is an estimated probability at which the research theme is made into business and a profit is obtained. It should be stored in the data base in advance, but may be calculated, as required, from the total research investment A, the market value D of the research result, and the shares of competitors in the market. The shares of competitors may be estimated by referring to the market-trend DB 81 through the communication network.
- The income estimate F for an information disclosure charge is an estimated income obtained by an information disclosure contract in which research-result information is disclosed to a company.
- The income estimate G for an optional charge is an estimated income obtained by an optional contract with a company. The optional contract provides a company before a reduction-to-practice contract, with the research result within a limited period. It provides the company with an experiment and trial period in which the company determines whether the research result can be reduced to practice. When the company determines from an experiment or a trial allowed by the optional contract that the research result can be reduced to practice, the company should make a reduction-to-practice contract.
- The royalty estimate r is an estimated royalty (the rate of charge of reduction to practice) obtained when a reduction-to-practice contract is made with a company.
- The lump-sum-payment estimate Ls is an estimate for the contract money obtained when a reduction-to-practice contract is made with a company.
- The license fee income estimate H is an estimated income obtained when a reduction-to-practice contract is made with a company for a research theme for which a patent is granted (or a research theme for which a patent is not granted).
- The risk coefficient I is the ratio of the income and expense calculated by the following equation from the planned investment and the estimated income of a research theme.

$$I = (A + B)/(F + G + H)$$

where, A indicates the total research investment, B indicates the future research investment, F indicates the income estimate for an information disclosure charge, G indicates the income estimate for an optional charge, and H indicates the license fee income estimate.

- The dividend estimate K is an estimated dividend to investors, estimated based on the total estimated income obtained by the research result.
- The profit index R is an index calculated from the market value D, the risk coefficient I, and the success probability E of the research result.
- The profit-index rank Br is one of a plurality of levels, obtained when the research theme is graded according to the calculated profit index R. For example, the rank is one of numerals 1 to 5. Any appropriate plurality of levels can be used for ranking. The profit-index rank Br may be indicated by a letter or symbol, instead of a numeral.

<Research-money-balance DB>

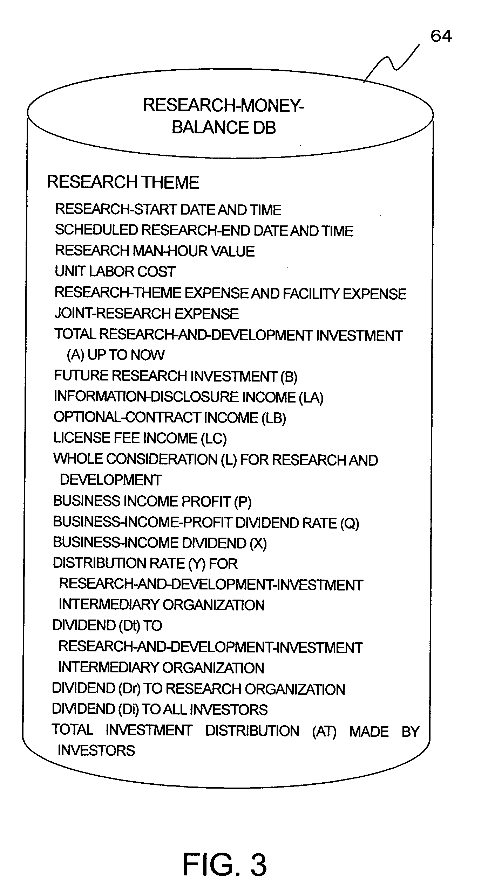

Fig. 3 is a view showing the format of research-money-balance information stored in the research-money-balance data base.

The research-money-balance DB 64 stores information related to research money such as an expense for the research theme and an income obtained by the reduction to practice of the research theme. The stored information includes the research theme, research-start date and time, scheduled research-end date and time, a research man-hour value, a unit labor cost, a research-theme expense and a facility expense, a joint-research expense, the total research-and-development investment (A) up to now, a future research investment (B), an information-disclosure income (LA), an optional-contract income (LB), a license fee income (LC), the whole consideration (L) for research and development, a business income profit (P), a business-income-profit dividend rate (Q), a business-income dividend (X), a distribution rate (Y) for a research-and-development-investment intermediary organization, a dividend (Dt) to the research-and-development-investment intermediary organization, a dividend (Dr) to a research organization, a dividend (Di) to all investors, and the total investment distribution (At) made by the investors.

The research man-hour value means information about the number of persons performing research per fiscal year. From this value, the human-resource size and labor cost for the research can be obtained. The research-theme expense and facility expense are, for example, a research expense and a facility expense in each fiscal year. When the joint-research expense is included in another item, the data thereof may be not recorded.

<Investment-information DB>

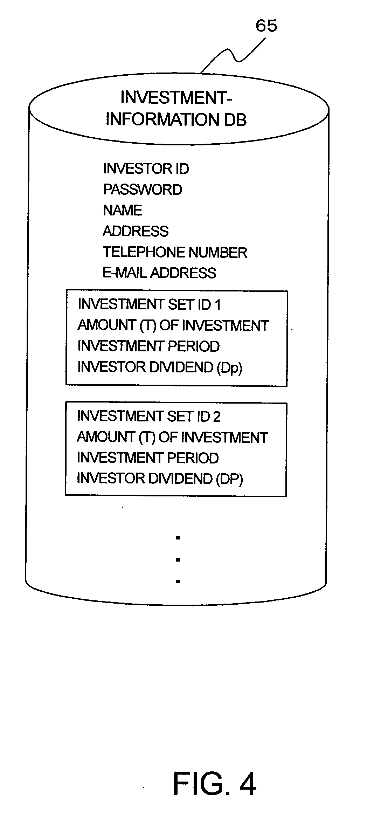

Fig. 4 is a view showing the format of investment information stored in the investment-information data base.

The investment-information DB 65 stores the personal information and investment information of an investor who has made an application for investment.

The personal information of an investor includes the investor ID, the password, the name, the address, the telephone number, and the e-mail address, and is stored when the investor has made an application for the first time. The investment information includes an investment set ID, the amount (T) of investment, an investment period, and an investor dividend (Dp). A plurality pieces of investment information can be stored for one investor ID. The investment set ID is an identification used for identifying a research-and-development investment set in which some research themes are collected. In the present embodiment, as one sales format of research-and-development investment securities, ten research themes are collected and securities therefor are sold as a research-and-development investment set.

<Research-theme-information DB>

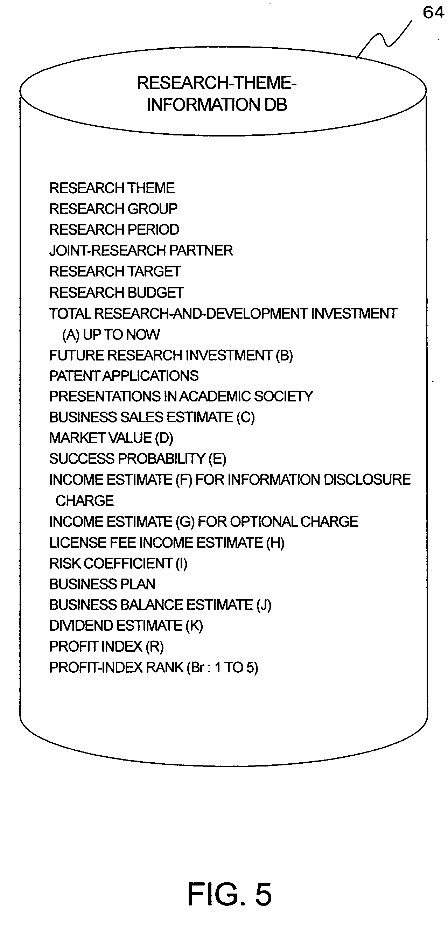

Fig. 5 is a view showing the format of research-theme information stored in the research-theme-information data base.

The research-theme-information DB 66 stores research-plan information, research-result information, research-money-balance information, expected-result information and others disclosed to investors, correspondingly to each research theme. The stored information includes the research theme, the research group, the research period, the joint-research partner, the research target, the research budget, the total research-and-development investment (A) up to now, the future research investment (B), the patent applications, presentations in a society, the business sales estimate (C), the market value (D), the success probability (E), the income estimate (F) for an information disclosure charge, the income estimate (G) for an optional charge, the license fee income estimate (H), the risk coefficient (I), the business plan, the business balance estimate (J), the dividend estimate (K), the profit index (R), and the profit-index rank (Br).

<Disclosure-information DB>

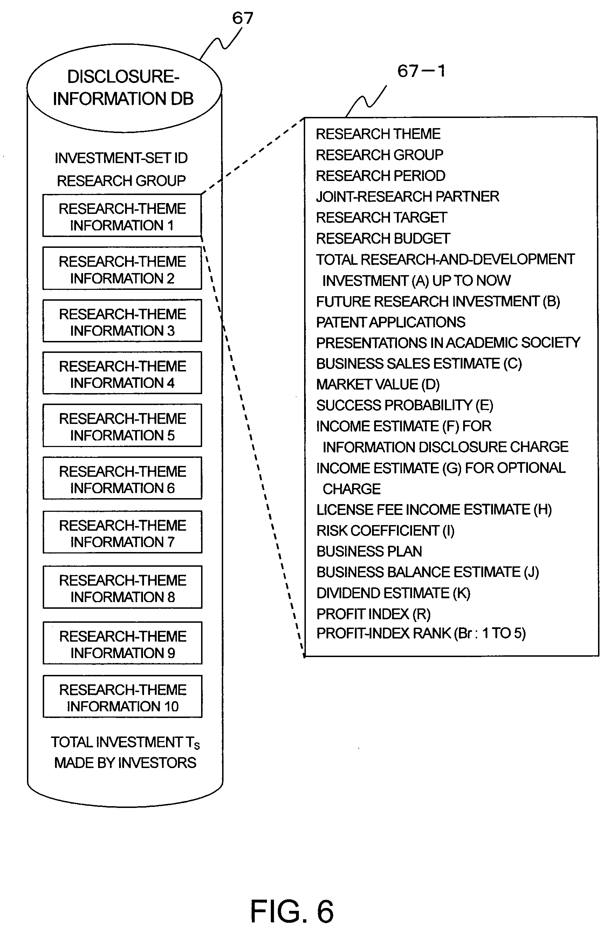

Fig. 6 is a view showing the format of disclosure information stored in the disclosure-information data base.

The disclosure-information DB 67 stores a research group, the information of all research themes belonging to a research-and-development investment set, and the total investment Ts made by investors, correspondingly to the investment-set ID. In the current embodiment, ten research themes are selected as one research-and-development investment set, but the number of themes selected is not limited to ten but can be set to any number.

3. Flowchart for the first embodiment

In the first embodiment, research-and-development investment securities are sold at a research-and-development investment set in which a plurality of research themes are collected. A sales method for research-and-development investment securities includes research-theme disclosure processing, processing for selling research-and-development investment securities, and dividend processing. The flowchart of each processing will be described below.

(Research-theme disclosure processing)

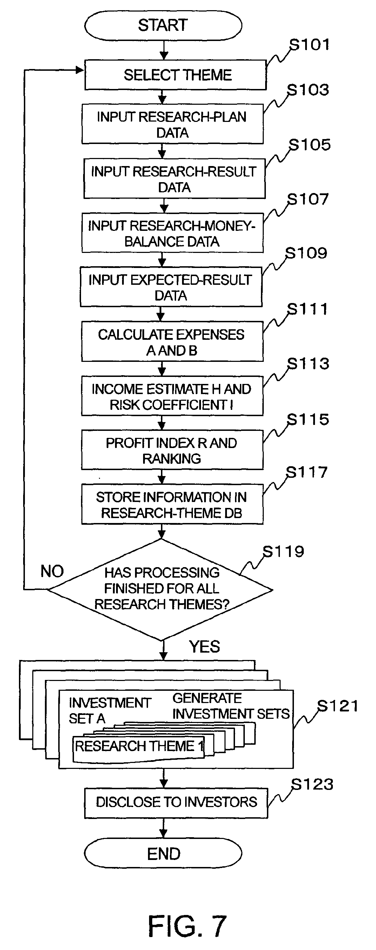

Fig. 7 is a flowchart of processing for disclosing research-theme information.

The processing section 1 selects one research theme among research themes stored in the research-plan DB 61 (in step S101). Then, the processing section 1 reads the research-plan data corresponding to the research theme from the research-plan DB 61 (in step S103). The input data includes the research group, the research organization, the joint-research partner, the research target, the research budget, and others. The processing section 1 reads the research-result data corresponding to the research theme from the research-result DB 62 (in step S105). The input data includes data such as the patent applications and the presentations in a society. Then, the processing section 1 reads the research-money-balance data corresponding to the research theme from the research-money-balance DB 64 (in step S107). The input data includes the research man-hour value, the unit labor cost, the research-them expense and facility expense, the joint-research expense, and others. Further, the processing section reads the expected-result data corresponding to the research theme from the expected-result DB 63 (in step S109). The input data includes the business sales estimate C, the market value D of the research result, the success probability E, the income estimate F for an information disclosure charge, the income estimate G for an optional charge, the royalty estimate r, the lump-sum-payment estimate Ls, the business plan, the business balance estimate J, the dividend estimate K, and others.

First, the processing section 1 calculates the total research-and-development investment A up to now and the future research investment B according to the following equation (in step S111) as expenses for the research theme by using the data read from the research-money-balance DB 64.

A = (research man-hour value) x (unit labor cost) + (research-theme expense and facility expense) + (joint-research expense)

$$B = (research\ budget) - A$$

When the joint-research expense is included in items such as the labor cost, the research-theme expense, and the facility expense and no data thereof exists, the joint-research expense item may be deleted. The processing section 1 stores the obtained A and B in the records corresponding to the research theme in the research-money-balance DB 64.

Then, the processing section 1 calculates a license-income estimate as an income estimate caused by the research result (in step S113). The license income includes, for example, the income estimate F for an information disclosure charge, the income estimate G for an optional charge, and the license fee income estimate H. The processing section 1 calculates the license fee income estimate H and the risk coefficient I according to the following equation.

$$H = C\ x\ r + Ls$$

where, C indicates the business sales estimate C, r indicates the royalty estimate r, and Ls indicates the lump-sum-payment estimate Ls, all of which are read from the expected-result DB 63.

$$I = (A + B)/(F + G + H)$$

where, A and B indicate the total research-and-development investment A up to now and the future research investment B, respectively, calculated in step S111, F and G indicate the income estimate F for an information disclosure charge and the income estimate G for an optional charge, respectively, read from the expected-result DB 63, and H indicates the license fee income estimate H, calculated in step S113. The processing section 1 may determine whether the business sales estimate C or the market value D of the research result, read from the data base is greater than 0.5A to replace F with D when greater.

Then, the processing section calculates the profit index R from the market value D of the research result, the success probability E, and the risk coefficient I, and ranks the research theme by the profit index R (in step S115). Specifically, the processing section 1 calculates the profit index R according to the following equation.

$$R = E\ x\ D/I$$

where, E and D indicates the success probability E and the market value, respectively, read from the expected-result DB 63, and I indicates the rink coefficient I obtained in step S113. The processing section 1 uses the obtained profit index R to rank the research theme according to a predetermined threshold with five-level profit-index ranks 1 to 5. The threshold used for ranking can be any appropriate value. The processing section 1 stores the income estimate F for an information disclosure charge, the license fee income estimate H, the risk coefficient I, the profit index R, and the profit-index rank Br in the records corresponding to the research theme in the expected-result DB 63 at appropriate timing.

Further, the processing section 1 stores in the research-theme-information DB 66 (in step S117) research-theme information such as the research theme, the research group, the research period, the joint-research partner, the research target, and the research budget read from the research-plan DB 61; the patent applications and the presentations in a society read from the research-result DB 62; the business sales estimate C, the market value D, the success probability E, the income estimate F for an information disclosure charge, the income estimate G for an optional charge, the business plan, the business balance estimate J, and the dividend estimate K read from the expected-result DB 63; the total research-and-development investment A up to now and the future research investment B obtained in step S111; the license fee income estimate H and the risk coefficient I obtained in step S113; and the profit index R and the profit-index rank Br obtained in step S115. Data to be stored in the research-theme DB 66 can be selected appropriately.

When ranking has not been performed for all the research themes stored in the research-plan DB 61, the processing section 1 returns to the process of step S101. When ranking has been performed for all the research themes, the processing section goes to the process of step S121 (in step S119).

Next, the processing section 1 generates a research-and-development investment set which includes 10 research themes among research themes in the same group of the research themes stored in the research-theme-information DB 66 (in step S121). The processing section 1 first classifies data stored in the research-theme-information DB 66 into research groups. The research themes are grouped in advance into research groups in technical fields such as communications and electronic components, and the research groups are stored in the research-plan DB 61 and the research-theme-information DB 66 in association with the research themes. The processing section 1 next selects a predetermined number of research themes in each profit-index rank Br from the research themes belonging to one research group to generate on research-and-development investment set. For example, the processing section 1 selects two research themes at random from research themes having each of profit-index ranks Br of 1 to 5 to generate a research-and-development investment set having a total of 10 themes. The processing section 1 assigns an investment-set ID to the research-and-development investment set to identify it, and stores research-theme information of the selected ten themes, the investment-set ID, and the research group in the disclosure-information DB 67. The processing section 1 generates and stores as many research-and-development investment sets as possible for one research group. The processing section 1 performs the foregoing processes for all the research groups or until a predetermined number of research-and-development investment sets are generated.

The processing section 1 discloses the research-and-development investment sets which include the research-theme information, stored in the disclosure-information DB 67, as an investment subscription guide through the communication-network connection section 5 via the Internet and others (in step S123). Means for disclosure may be recording media, indications, printed materials, bulletin boards, mailing, broadcasting, and others, in addition to communication networks such as the Internet.

(Processing for selling research-and-development investment securities)

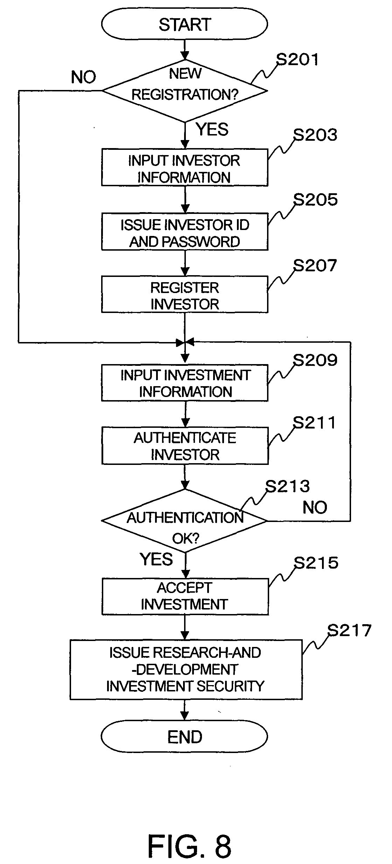

Fig. 8 is a flowchart of processing for selling research-and-development investment securities.

An investor accesses the research-and-development investment securities selling system from the investor terminal 7 connected to the communication network. The investor terminal 7 selects a research-and-development investment set in which money is to be invested, from the released investment subscription guide, and subscribes for the investment in the research-and-development investment securities selling system. In the present embodiment, the research-and-development investment securities selling system assigns an investor ID and a password to the investor terminal 7 to register the investor. When the investor first subscribes for an investment, the investor terminal 7 first asks for registration. When the processing section 1 receives a request sent from the investor terminal 7, the processing section 1 automatically executes the following processing.

First, the processing section 1 determines whether an request input from the investor terminal 7 through the communication network is a registration request or an investment subscription. When the processing section 1 determines that the input request is an investment subscription, the processing section 1 goes to step S209. When the processing section 1 determines that the input request is a registration request, the processing section goes to step S203 (in step S201). The processing section 1 receives investor information such as the investor name, address, telephone number, e-mail address, payment method, and others output from the investor terminal 7, through the communication-network connection section 5 (in step S203). The processing section 1 assigns an investor ID and a password to the investor terminal 7 (in step S205). The processing section 1 also stores the investor ID, the password, and the received investor information into the investment-information DB 65 (in step S207).

In an investment subscription, the processing section 1 receives investment information, such as the investor ID, the password, an investment-set ID, the amount of investment, and others, output from the investor terminal 7, through the communication-network connection section 5 (in step S209). The processing section 1 refers to the investment-information DB 65 to authenticate the investor by using the received investor ID and password (in step S211). When the investor is not successfully authenticated, the processing section 1 returns to step S209. When the investor is successfully authenticated, the processing section 1 goes to the process of step S215 (in step S213). The processing section 1 stores the investment-set ID and the amount of investment in the investment information corresponding to the investor ID, in the investment-information DB 65 (in step S215).

Further, the processing section 1 issues a research-and-development investment security corresponding to the amount of investment, and sells it to the investor terminal 7 (in step S217). The processing section 1 may subtract the handling charge of the research-and-development-investment intermediary organization from the fund obtained by selling the research-and-development investment security to calculate the research fund. The processing section 1 also distributes the research fund to the research themes belonging to the research-and-development investment set. In the present embodiment, the processing section 1 distributes the research fund to each of the ten research themes according to the research budgets and others. Any appropriate distribution method can be taken, such as uniform distribution, distribution based on the total research-and-development investment A, distribution based on the research budgets, and distribution based on the future research investment. The processing section 1 adds the research fund distributed to each research theme to the total investment distribution (At) made by investors, stored in the research-money-balance DB 64.

(Dividend processing)

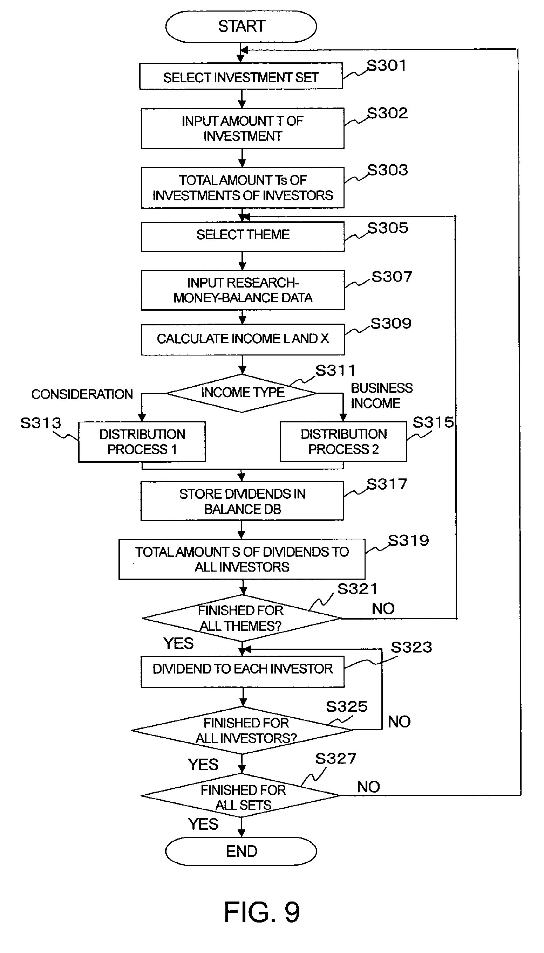

Fig. 9 is a flowchart of a dividend calculation.

The processing section 1 executes the following processing at a dividend time specified by the research-and-development-investment intermediary organization.

First, the processing section 1 refers to the disclosure-information DB 67 (in step S301) to select a research-and-development investment set for which a dividend is to be calculated. The processing section 1 searches the investment-information DB 65 by using the investment-set ID as a key to sequentially read the amounts T of investment from all the pieces of investment information corresponding to the research-and-development investment set (in step S302). The processing section 1 calculates the total amount Ts of investment of all investors who made investment in the research-and-development investment set from the read amounts T of investment (in step S303). The processing section 1 also sets the initial value of the total amount S of dividends to all investors to zero.

The processing section 1 refers to the disclosure DB 67 to select one research theme to which the research-and-development investment set belongs (in step S305). The processing section 1 refers to the research-money-balance DB 64 to read the information-disclosure income LA, the optional-contract income LB, the license fee income LC, the business income profit P, the business-income-profit dividend rate Q, the distribution rate Y for the research-and-development-investment intermediary organization, the total research-and-development investment A up to now, and the total investment distribution At made by investors all corresponding to the selected research theme (in step S307). Then, the processing section 1 uses data read from the research-money-balance DB to calculate the whole consideration L for research and development and the business-income dividend X according to the following equations (in step S309).

$$L = LA + LB + LC$$

$$X = P \times Q$$

A dividend to each organization is determined according to the following calculations. The processing section 1 determines whether the income corresponding to the research theme depends on the consideration for research and development or the business income (in step S311). Any appropriate determination method can be used. For example, if the whole consideration for research and development is zero, it means that the income does not depend on the research-and-development consideration. The same can be applied to the business-income dividend X.

When the processing section 1 determines that the income depends on the research-and-development consideration (in step S311), the processing section 1 uses the whole consideration L for research and development to calculate dividends to the research-and-development-investment intermediary organization, to the research organization, and to all investors according to the following equations (in step S313), and goes to step S317.

Dividend Dt to the research-and-development-investment intermediary organization = L x Y

Dividend Dr to the research organization = L x (1 - Y) x

((A - At)/A)

Dividend Di to all investors = L x (1 - Y) x (At/A)

where, L indicates the whole consideration for research and development calculated in step S309, and Y, A, and At indicate the distribution rate Y for the research-and-development-investment intermediary organization, the total research-and-development investment A up to now, and the total investment distribution At made by investors all read from the research-money-balance DB 64.

When the processing section 1 determines that the income depends on the business-income profit (in step S311), the processing section 1 calculates dividends to all investors among the business-income dividend X according to the following equation (in step S315), and goes to step S317.

Dividend Di to all investor = X x Ts/A

where, X indicates the business-income dividend X calculated in step S309, Ts indicates the total investment Ts made by investors calculated in step S303, and A indicates the total research-and-development investment A up to now read from the research-money-balance DB 64. From the business-income dividend X, the charge for the research-and-development-investment intermediary organization and the dividend to the research organization are paid. The remaining serves as a business profit. When the dividends are generated from both of the research-and-development consideration and the business income, the dividend Di to all investors can be the total of these factors.

The processing section 1 stores the dividend Dt to the research-and-development-investment intermediary organization, the dividend Dr to the research organization, and the dividend Di to all investors as research-money-balance information corresponding to the research theme in the research-money-balance DB 64 (in step S317). The processing section 1 adds the obtained dividend Di to all investors to the total amount S of dividends to all investors (in step S319). When the processing section 1 has not yet calculate dividends for all the themes (in the present embodiment, 10 themes) belonging to the research-and-development investment set (in step S321), the processing section 1 returns to step S305 and selects another research theme. When the processing section 1 has finished calculating dividends for all the themes belonging to the research-and-development investment set (in step S321), the processing section 1 goes to the process of step S323.

Then, the processing section 1 refers to the investment-information DB 65 to read the investor ID and the amount T of investment of an investor who made an investment to the research-and-development investment set. The processing section 1 calculates a dividend to the read investor according to the following equation (in step S323) by using the total dividends S to all investors, the total amount Ts of investment made by the investors, and the amount of investment made by the read investor.

Dividend Dp to investor = S x T/Ts

where, S indicates the total amount S of dividends to all investors calculated in step S319, T indicates the amount T of investment made by an investor read from the investment-information DB 65, and Ts indicates the total amount Ts of investment made by the investors calculated in step S303. The processing section 1 stores the calculated dividend Dp to the investor as the investment information corresponding to the investor ID in the investment-information DB 65.

The processing section 1 refers to the investment-information DB 65. When another piece of investment information related to an investment to the research theme exists, the processing section returns to step S323. When all pieces of the investment information have been handled, the processing section goes to step S327 (in step S325).

When the processing section 1 has not yet calculated dividends for all the research-and-development investment sets stored in the disclosure-information DB 67, the processing section 1 returns to step S301. When the processing section 1 has finished calculating dividends for all the research-and-development investment sets, the processing section 1 terminates the processing (in step S327).

4. Hardware configuration in a second embodiment

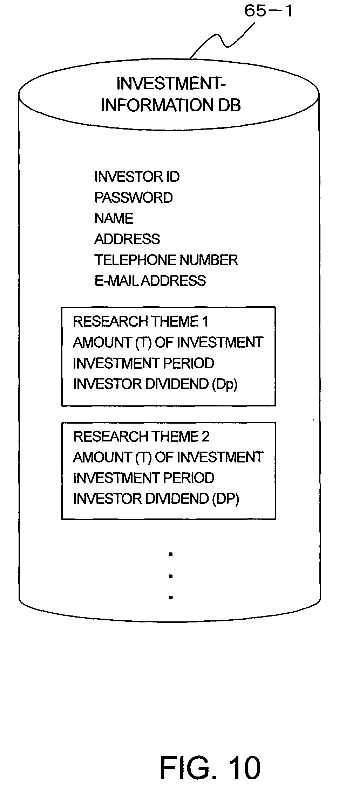

In a second embodiment, research-and-development investment securities are sold for each research theme. The second embodiment differs from the first embodiment in hardware structure in that the disclosure-information DB 67 is unnecessary, and the investment-information DB 65 is changed to that shown in Fig. 10. The other configurations are the same as in the first embodiment.

Fig. 10 is a view showing the format of investment information stored in an investment-information data base used when securities are sold for each research theme.

5. Flowchart in the second embodiment

Flowcharts of research-theme disclosure processing, processing for selling research-and-development investment securities, and dividend processing used when research-and-development investment securities are sold for each research theme will be described below.

(Research-theme disclosure processing)

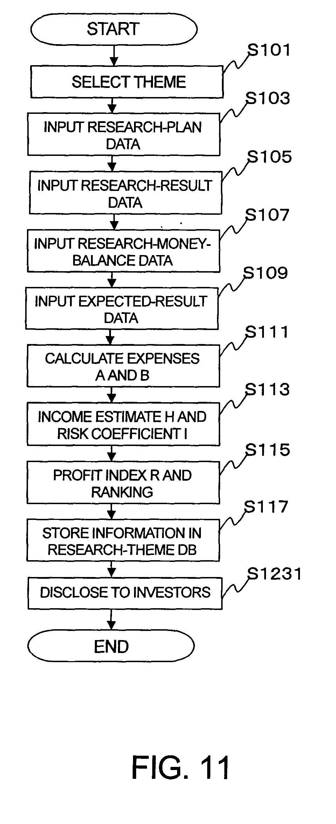

Fig. 11 is a flowchart of processing for disclosing research-theme information, used when investment securities are sold for each research theme.

Steps S101 to S117 are the same as those described in the first embodiment. The processing section 1 executes the process of each of these steps.

Then, the processing section 1 discloses research-theme information stored in the research-theme-information DB 66 through the communication-network connection section 5 via the Internet or others as an investment subscription guide (in step S1231). The processing section 1 may returns to step S101 to perform the same processing for another theme.

(Processing for selling research-and-development investment securities)

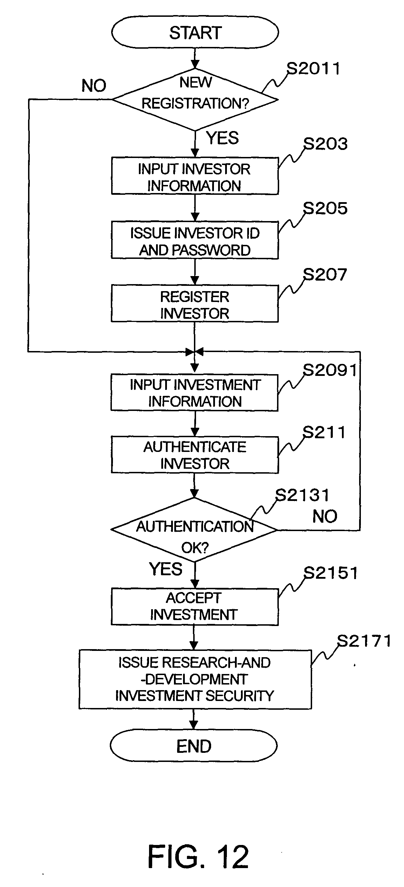

Fig. 12 is a flowchart of processing for selling research-and-development investment securities, used when investment securities are sold for each research theme.

In the same way as in the first embodiment, an investor accesses the research-and-development investment securities selling system from the investor terminal 7 connected to the communication network. The investor terminal 7 selects a research theme in which money is to be invested, from the released investment subscription guide, and subscribes for the investment in the research-and-development investment securities selling system. The research-and-development investment securities selling system register the investor when the investor first requests a subscription for the investment. When the processing section 1 receives a request sent from the investor terminal 7, the processing section 1 automatically executes the following processing.

First, the processing section 1 determines whether an request input from the investor terminal 7 through the communication network is a registration request or an investment subscription. When the processing section 1 determines that the input request is an investment subscription, the processing section 1 goes to step S2091. When the processing section 1 determines that the input request is a registration request, the processing section goes to step S203 (in step S2011).

Steps S203 to S207 are the same as those described in the first embodiment. The processing section 1 executes the process of each of these steps.

Next, in an investment subscription, the processing section 1 receives investment information, such as the investor ID, the password, the research theme, the amount of investment, and others, output from the investor terminal 7, through the communication-network connection section 5 (in step S2091). The processing section 1 executes the process of step S211 in the same way as for that described in the first embodiment. When the investor is not successfully authenticated, the processing section 1 returns to step S2091. When the investor is successfully authenticated, the processing section 1 goes to the process of step S2151 (in step S2131). The processing section 1 stores the research theme and the amount of investment in the investment information corresponding to the investor ID, in the investment-information DB 65 (in step S2151).

Further, the processing section 1 issues a research-and-development investment security corresponding to the amount of investment, and sells it to the investor terminal 7 (in step S217). The processing section 1 may subtract the handling charge of the research-and-development-investment intermediary organization from the fund obtained by selling the research-and-development investment security to calculate the research fund for the research theme. The processing section 1 adds the research fund for the research theme to the total investment distribution (At) made by investors, stored in the research-money-balance DB 64.

(dividend processing)

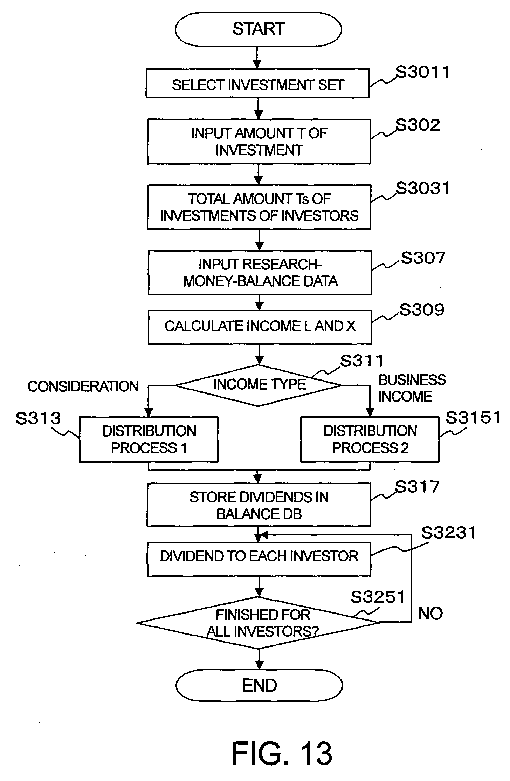

Fig. 13 is a flowchart of a dividend calculation, used when securities are sold for each research theme.

The processing section 1 executes the following processing at a dividend time specified by the research-and-development-investment intermediary organization.

First, the processing section 1 refers to the research-theme-information DB 66 (in step S3011) to select a research theme for which a dividend is to be calculated. The processing section 1 searches the investment-information DB 65 by using the research theme as a key to sequentially read the amounts T of investment from all the pieces of investment information corresponding to the research theme (in step S3021). The processing section 1 calculates the total amount Ts of investment of all investors who made investment in the research theme from the read amounts T of investment (in step S3031). The processing section 1 executes steps S307 to S313 in the same way as in those described in the first embodiment.

When the processing section 1 determines that the income depends on the business-income profit (in step S311), the processing section 1 calculates dividends to all investors among the business-income dividend X according to the following equation (in step S3151), and goes to step S317.

$$\text{Dividend Di to all investor} = X \times Ts/A$$

where, X indicates the business-income dividend X calculated in step S309, Ts indicates the total investment Ts made by investors calculated in step S3031, and A indicates the total research-and-development investment A up to now read from the research-money-balance DB 64. From the business-income dividend X, the charge for the research-and-development-investment intermediary organization and the dividend to the research organization are paid. The remaining serves as a business profit. When the dividends are generated from both of the research-and-development consideration and the business income, the dividend Di to all investors can be the total of these factors. Step S317 is the same as that described in the first embodiment.

Then, the processing section 1 refers to the investment-information DB 65 to read the investor ID and the amount T of investment of an investor who made an investment to the research theme. The processing section 1 calculates a dividend to the read investor according to the following equation (in step S3231) by using the dividend Di to all investors, the total amount Ts of investment made by the investors, and the amount of investment made by the read investor.

$$\text{Dividend Dp to investor} = Di \times T/Ts$$

where, Di indicates the dividends to all investors calculated in step S313 and/or step S3151, T indicates the amount T of investment made by an investor read from the investment-information DB 65, and Ts indicates the total amount Ts of investment made by the investors calculated in step S3031. The processing section 1 stores the calculated dividend Dp to the investor as the investment information corresponding to the investor ID in the investment-information DB 65.

The processing section 1 refers to the investment-information DB 65. When another piece of investment information related to an investment to the research theme exists, the processing section returns to step S3231. When all pieces of the investment information have been handled, the processing section 1 terminates the processing (in step S3251). The processing section 1 may return to step S3011 to perform the same processing to another research theme.

The above-described processing is performed when the information disclosure contract, the optional contract, and the reduction-to-practice contract of the research result are made with one reduction-to-practice organization. Each of the contacts may be made with a plurality of reduction-to-practice organizations. In that case, the estimated number (n1) of companies to which information is disclosed, the estimated number (n2) of companies with which the optional contract is to be made, and the estimated number (n3) of reduction-to-practice companies are stored in the expected-result DB 63. The processing section 1 may be calculate the risk coefficient I according to the following equation in step S113.

$$I = (A + B)/(n1 \times F + n2 \times G + n3 \times H)$$

where A indicates the total research-and-development investment (A) up to now, B indicates the future research investment, F indicates the income estimate for an information disclosure charge, G indicates the income estimate for an optional charge, and H indicates the license fee income estimate. When contacts are made with a plurality of reduction-to-practice organizations, an information disclosure charge, an optional charge, and a license fee for one reduction-to-practice organization may be respectively equal to the income estimate F for an information disclosure charge, the income estimate G for an optional charge, and the license fee income estimate H divided by the estimated numbers n1, n2, and n3 of companies which make the corresponding contracts. The information-disclosure income LA, the optional-contract income LB, and the license fee income LC stored in the research-money-balance DB 64 should have the corresponding total amounts of income from a plurality of reduction-to-practice organizations.

6. Additional note

A research-and-development investment securities selling method or a research-and-development investment securities selling system according to the present invention can be provided by a research-and-development investment securities selling program having a computer execute each of steps of the method or the system, a computer-readable recording medium having stored thereon the research-and-development investment securities selling program, a program product which includes the research-and-development investment securities selling program and which can be loaded into an internal memory of a computer, a computer, such as a server, which includes the program, and others.

Industrial Applicability

According to the present invention, a research-and-development investment securities selling method, a research-and-development investment securities selling system, a research-and-development investment securities selling program, and a recording medium having stored thereon the program, all for implementing processes and procedures in a research-investment intermediary organization, which organically connect research-and-development organizations and private investors, can be provided. In addition, according to the present invention, chances for making investment in research and development can be provided by evaluating research themes objectively and disclosing the evaluation to private investors. According to the present invention, by selling research-and-development investment securities, investment can be made definite and research-and-development funds can be collected. Further, according to the present invention, a research money and the amounts of investments for research and development can be managed, and investment dividends can be paid according to the amounts of investments.

**Claims**

**1.** A research-and-development securities selling method comprising:

a step in which a processing section reads each information corresponding to research-theme identification information from a storage section having stored for each research-theme identification information, research-plan information which includes research-group identification information and research-budget information, research-result information which includes patent information or academic-society-presentation information, research-money-balance information which includes income information and expense information related to the research theme, and expected-result information which includes, income-estimate information other than that of a license fee, the market-value information D of a research target, success-probability information E, and income estimate information;

a step in which the processing section calculates a total research investment A up to now according to the expense information recorded in the research-money-balance information read from the storage section, according to each research-theme identification information;

a step in which the processing section calculates future research investment B by subtracting the total research investment A from the research-budget information recorded in the research-plan information read from the storage section, according to each research-theme identification information;

a step in which the processing section calculates a license fee income estimate H according to the income-estimate information recorded in the expected-result information, according to each research-theme identification information;

a step in which the processing section calculates a risk coefficient I according to the ratio of the amount of expenses which includes the total research investment A and the future research investment B to the amount of income which includes the license fee income estimate H and the income-estimate information other than that of the license fee recorded in the expected-result data, for each research-theme identification information;

a step in which the processing section obtains a profit index R indicating an estimated probability of obtaining a profit when a research theme is reduced to business, according to the ratio of the market-value information D and the success-probability information E recorded in the expected-result information to the risk coefficient I, for each research-theme identification information;

a step in which the processing section ranks a profit-index rank according to the value of the profit index R, for each research-theme identification information; and

a step in which the processing section stores research-theme information which includes the total research investment A, the future research investment B, the risk coefficient I, the profit-index rank, and the research-result information in a research-theme data base in association with the research-theme identification information and discloses the research-theme information through a communication network.

2. A research-and-development securities selling method comprising:

a step in which a processing section reads each information corresponding to research-theme identification information from a storage section having stored for each research-theme identification information, research-plan information which includes research-group identification information and research-budget information, research-result information which includes patent information or academic-society-presentation information, research-money-balance information which includes income information and expense information related to the research theme, and expected-result information which includes, income-estimate information other than that of a license fee, the market-value information D of a research target, success-probability information E, and income estimate information;

a step in which the processing section calculates a total research investment A up to now according to the expense information recorded in the research-money-balance information read from the storage section, according to each research-theme identification information;

a step in which the processing section calculates future research investment B by subtracting the total research investment A from the research-budget information recorded in the research-plan information read from the storage section, according to each research-theme identification information;

a step in which the processing section calculates a license fee income estimate H according to the income-estimate information recorded in the expected-result information, according to each research-theme identification information;

a step in which the processing section calculates a risk coefficient I according to the ratio of the amount of expenses which includes the total research investment A and the future research investment B to the amount of income which includes the license fee income estimate H and the income-estimate information other than that of the license fee recorded in the expected-result data, for each research-theme identification information;

a step in which the processing section obtains a profit index R indicating an estimated probability of obtaining a profit when a research theme is reduced to business, according to the ratio of the market-value information D and the success-probability information E recorded in the expected-result information to the risk coefficient I, for each research-theme identification information;

a step in which the processing section ranks a profit-index rank according to the value of the profit index R, for each research-theme identification information;

a step in which the processing section stores research-theme information which includes the total research investment A, the future research investment B, the risk coefficient I, the profit-index rank, and the research-result information in a research-theme data base in association with the research-theme identification information;

a step in which the processing section generates an investment set by selecting a predetermined plurality of pieces of research-theme identification information in an identical research group or similar research groups according to the research-group identification information recorded in the research-plan information read from the storage section, and stores disclosure information which includes the research-group identification information, the plurality of pieces of research-theme identification information, and a plurality of pieces of research-theme information in association with investment-set identification information; and

a step in which the processing section discloses the disclosure information read from the disclosure-information data base through a communication network.

3. A research-and-development securities selling method according to Claim 2, wherein
the processing section selects a plurality of research themes by combining research themes having a predetermined profit-index rank or research themes in a plurality of profit-index ranks according to the profit-index rank of each research theme among the identical research group or the similar research groups, and generates one investment set with a predetermined number of research themes.

**4.** A research-and-development securities selling method according to one of Claims 1 and 2, wherein the step in which the processing section reads each information comprises:

a step in which the processing section reads each information corresponding to research-theme identification information from a research-plan data base having stored for each research-theme identification information, the research-plan information which includes the research-group identification information and the research-budget information;

a step in which the processing section reads each information corresponding to research-theme identification information from a research-result data base having stored for each research-theme identification information, the research-result information which includes the patent information or the academic-society-presentation information;

a step in which the processing section reads each information corresponding to research-theme identification information from a research-money-balance data base having stored for each research-theme identification information, the income information and the expense information related to the research theme; and

a step in which the processing section reads information corresponding to research-theme identification information from an expected-result data base having stored for each research-theme identification information, the income-estimate information other than that of a license fee, the market-value information D of a research target, the success-probability information E, and the income estimate information.

**5.** A research-and-development securities selling method according to one of Claims 1 to 4, wherein the processing section calculates the risk coefficient I according to the following equation by using the expenses which includes the obtained total research investment A and the obtained future research investment B, and an income estimate which includes the license fee income estimate H, an information-disclosure-charge income estimate F obtained from an information-disclosure contract for disclosing the research-result information read from the storage section, and an optional-charge income estimate G obtained from an optional contract for providing the research result for a company within a defined period before a license contract is made,

$$I = (A + B)/(F + G + H).$$

**6.** A research-and-development securities selling method according to one of Claims 1 to 5, further comprising:

a step in which the processing section performs authentication according to investor information which includes investor identification information and a password, sent from an investor terminal;

a step in which, when the authentication has been successfully performed, the processing section receives investment-content information which includes the identification information of a research theme or the identification information of an investment set in which investment is to be made, and the amount of investment, sent from the investor terminal, and stores the investor information and the investment-content information in an investment-information data base in association with the investor identification information;

a step in which the processing section issues or outputs a certificate for a research-and-development investment security corresponding to the amount of investment; and

a step in which the processing section adds an amount of money corresponding to the amount of investment for each research-theme identification information to the total $A_t$ of investment distributions made by investors, stored in the storage section for each research-theme identification information.

**7.** A research-and-development securities selling method according to Claim 6, wherein the processing section distributes the amount of investment to each of a plurality of research themes included in the investment set according to the investment-content information corresponding to the received investment-set identification information.

**8.** A research-and-development securities selling method according to one of Claims 6 and 7, further comprising:

a step in which the processing section receives information related to the investor and required for registration from the investor terminal;

a step in which the processing section gives investor identification information and a password after receiving the information related to the investor, and transmits these data items to the investor terminal; and

a step in which the processing section stores the password and the information related to the investor in the investment-information data base in association with the investor identification information.

**9.** A research-and-development securities selling method according to one of Claims 1 to 8, further comprising:

a step in which the processing section calculates the total investment Ts made by investors for the identification information of each research theme to which a profit is to be distributed, according to investment-content information which includes the identification information of a research theme in which investment is to be made and the amount of investment for each investor identification information, read from an investment-information data base having stored the investment-content information;

a step in which the processing section distributes, for research-theme identification information, the whole consideration L for research and development and/or a business income profit P included in the income information recorded in the research-money-balance information read from the storage section, according to the ratio of the total At of investment distributions or the total investment Ts to the total research investment A, and calculates dividends to all investors for the research-theme identification information;

a step in which the processing section stores the calculated dividends to all investors in association with the research-theme identification information in the storage section; and

a step in which the processing section distributes the dividends to all investors read from the storage section, to each investor identification information according to the amount of investment corresponding to the investor identification information read from the investment-information data base, and stores the distributed dividend in the investment-information data base correspondingly to each investor identification information.

**10.** A research-and-development securities selling method according to one of Claims 1 to 8, further comprising:

a step in which the processing section calculates the total investment Ts made by investors for the each investment set identification information to which a profit is to be distributed, according to investment-content information which includes investment-set identification information and the amount of investment for investor identification information, read from an investment-information data base having stored the investment-content information, and disclosure information read from a disclosure-information data base;

a step in which the processing section refers to the investment-information data base, to each research-theme identification information included in an investment set specified by the investment-set identification information, distributes the whole consideration L for research and development and/or a business income profit P included in the income information recorded in the research-money-balance information read from the storage section and the total research investment A according to the ratio of the total At of investment distributions or the total investment Ts to the total research investment A, and calculates dividends to all investors for the research-theme identification information;

a step in which the processing section stores the calculated dividends to all investors in association with each research theme included in the investment set, in the storage section;

a step in which the processing section refers to the storage section, totals the dividends to all investors for all research themes included in the investment set and obtains the total amount S of dividends to investors for the investment-set identification information;

a step in which the processing section obtains a dividend to each investor from the total amount S of dividends to all investors, according to the ratio of the amount T of investment of corresponded the investor identification information to the total investment Ts made by all investors, for each investment set; and

a step in which the processing section stores the calculated dividend to each investor in the investment-information data base corresponding to the investor identification information in the investment-information data base.

**11.** A research-and-development securities selling method comprising:

a step in which a processing section reads each information corresponding to research-theme identification information from a storage section having stored, for each research-theme identification information, research-money-balance information which includes income information and expense information related to a research them, the total research investment A, and the total At of investment distributions made by investors;

a step in which the processing section reads each information corresponding to investor identification information from investment-information data base having stored, for each investor identification information, investment-content information which includes the identification information of a research theme in which investment is to be made and the amount of investment;

a step in which the processing section calculates the total investment Ts made by investors for the identification information of each research theme to which a profit is to be distributed, according to the investment-content information read from the investment-information data base correspondingly to the investor identification information;

a step in which the processing section distributes, to research-theme identification information, the whole consideration L for research and development and/or a business income profit P included in the income information recorded in the research-money-balance information read from the storage section, according to the ratio of the total At of investment distributions or the total investment Ts to the total research investment A, and calculates dividends to all investors for the research-theme identification information;

a step in which the processing section stores the calculated dividends to all investors in association with the research-theme identification information in the storage section; and

a step in which the processing section distributes the dividends to all investors read from the storage section to each investor identification information according to the amount of investment corresponding to the investor identification information read from the investment-information data base, and stores the distributed dividend in the investment-information data base correspondingly to each investor identification information.

**12.** A research-and-development securities selling method comprising:

a step in which a processing section reads each information corresponding to research-theme identification information from a storage section having stored, for each research-theme identification information, research-money-balance information which includes income information and expense information related to a research them, the total research investment A, and the total At of investment distributions made by investors;

a step in which the processing section reads each information corresponding to investor identification information from investment-information data base having stored, for each investor identification information, investment-content information which includes the identification information of a research theme in which investment is to be made and the amount of investment;

a step in which the processing section reads each information corresponding to the investment-set identification information from disclosure-information data base having stored disclosure information which includes research-group identification information, a plurality of pieces of research-theme identification information, and a plurality of pieces of research-theme information for the investment-set identification information;

a step in which the processing section calculates the total investment Ts made by investors for the each investment set identification information to which a profit is to be distributed, according to the investment-content information read from the investment-information data base correspondingly to the investor identification information, and the disclosure information read from the disclosure-information data base;

a step in which the processing section distributes, to each research-theme identification information included in an investment set specified by the investment-set identification information according to information read from the investment-information data base, the whole consideration L for research and development and/or a business income profit P included in the income information recorded in the research-money-balance information read from the storage section and the total research investment A according to the ratio of the total At of investment distributions or the total investment Ts to the total research investment A, and calculates dividends to all investors for the research-theme identification information;

a step in which the processing section stores the calculated dividends to all investors in association with each research theme included in the investment set, in the storage section;

a step in which the processing section totals the dividends to all investors for all research themes included in the investment set according to information read from the storage section to obtain the total amount S of dividends to investors for the investment-set identification information;

a step in which the processing section obtains a dividend to each investor from the total amount S of dividends to all investors according to the ratio of the amount T of investment of the investor identification information to the total investment Ts made by all investors, for each investment set; and

a step in which the processing section stores the calculated dividend to each investor in the investment-information data base corresponding to the investor identification information in the investment-information data base.

**13.** A research-and-development securities selling method according to one of Claims 11 and 12, wherein

the processing section uses one of or totals any of information-disclosure income LA obtained when research-result information is disclosed to a reduction-to-practice organization of research-and-development results, optional-contract income LB obtained when an experimental license contract is made with the reduction-to-practice organization for a certain period, and license fee income LC obtained when a license contract is made with the reduction-to-practice organization to obtain the whole consideration L for research and development which is the sum of research-and-development consideration income obtained when a technology is transferred to the reduction-to-practice organization, for the research-theme identification information; and

the processing section distributes, to the research-theme identification information, the whole consideration L for research and development according to a distribution rate Y determined in advance and recorded in the research-money-balance information, the total At of investment distributions made by investors, and the total research investment A for the research-theme identification information, and calculates dividends to all investors who have invested in the research-theme identification information.

**14.** A research-and-development securities selling method according to one of Claims 11 and 12, wherein
the processing section calculates a business income dividend X for the research-theme identification information according to a business income profit P recorded in the research-money-balance information read from the storage section and a business-income-profit dividend rate Q determined in advance; and
the processing section calculates dividends to all investors for the research-theme identification information from the business income dividend X according to the total At of investment distributions made by investors, recorded in the research-money-balance information and the total research investment A.

**15.** A research-and-development securities selling program which makes a computer execute each of steps wherein;
a step in which a processing section reads each information corresponding to research-theme identification information from a storage section having stored for each research-theme identification information, research-plan information which includes research-group identification information and research-budget information, research-result information which includes patent information or academic-society-presentation information, research-money-balance information which includes income information and expense information related to the research theme, and expected-result information which includes, income-estimate information other than that of a license fee, the market-value information D of a research target, success-probability information E, and income estimate information;
a step in which the processing section calculates a total research investment A up to now according to the expense information recorded in the research-money-balance information read from the storage section, according to each research-theme identification information;
a step in which the processing section calculates future research investment B by subtracting the total research investment A from the research-budget information recorded in the research-plan information read from the storage section, according to each research-theme identification information;
a step in which the processing section calculates a license fee income estimate H according to the income-estimate information recorded in the expected-result information, according to each research-theme identification information;
a step in which the processing section calculates a risk coefficient I according to the ratio of the amount of expenses which includes the total research investment A and the future research investment B to the amount of income which includes the license fee income estimate H and the income-estimate information other than that of the license fee recorded in the expected-result data, for each research-theme identification information;
a step in which the processing section obtains a profit index R indicating an estimated probability of obtaining a profit when a research theme is reduced to business, according to the ratio of the market-value information D and the success-probability information E recorded in the expected-result information to the risk coefficient I, for each research-theme identification information;
a step in which the processing section ranks a profit-index rank according to the value of the profit index R, for each research-theme identification information; and
a step in which the processing section stores research-theme information which includes the total research investment A, the future research investment B, the risk coefficient I, the profit-index rank, and the research-result information in a research-theme data base in association with the research-theme identification information and discloses the research-theme information through a communication network.

**16.** A research-and-development securities selling program which makes a computer execute each of steps wherein;
a step in which a processing section reads each information corresponding to research-theme identification information from a storage section having stored for each research-theme identification information, research-plan information which includes research-group identification information and research-budget information, research-result information which includes patent information or academic-society-presentation information, research-money-balance information which includes income information and expense information related to the research theme, and expected-result information which includes, income-estimate information other than that of a license fee, the market-value information D of a research target, success-probability information E, and income estimate information;
a step in which the processing section calculates a total research investment A up to now according to the expense information recorded in the research-money-balance information read from the storage section, according to each research-theme identification information;

a step in which the processing section calculates future research investment B by subtracting the total research investment A from the research-budget information recorded in the research-plan information read from the storage section, according to each research-theme identification information;

a step in which the processing section calculates a license fee income estimate H according to the income-estimate information recorded in the expected-result information, according to each research-theme identification information;

a step in which the processing section calculates a risk coefficient I according to the ratio of the amount of expenses which includes the total research investment A and the future research investment B to the amount of income which includes the license fee income estimate H and the income-estimate information other than that of the license fee recorded in the expected-result data, for each research-theme identification information;

a step in which the processing section obtains a profit index R indicating an estimated probability of obtaining a profit when a research theme is reduced to business, according to the ratio of the market-value information D and the success-probability information E recorded in the expected-result information to the risk coefficient I, for each research-theme identification information;

a step in which the processing section ranks a profit-index rank according to the value of the profit index R, for each research-theme identification information;

a step in which the processing section stores research-theme information which includes the total research investment A, the future research investment B, the risk coefficient I, the profit-index rank, and the research-result information in a research-theme data base in association with the research-theme identification information;

a step in which the processing section generates an investment set by selecting a predetermined plurality of pieces of research-theme identification information in an identical research group or similar research groups according to the research-group identification information recorded in the research-plan information read from the storage section, and stores disclosure information which includes the research-group identification information, the plurality of pieces of research-theme identification information, and a plurality of pieces of research-theme information in association with investment-set identification information; and

a step in which the processing section discloses the disclosure information read from the disclosure-information data base through a communication network.

**17.** A research-and-development securities selling program which makes a computer execute each of steps wherein;

a step in which a processing section reads each information corresponding to research-theme identification information from a storage section having stored, for each research-theme identification information, research-money-balance information which includes income information and expense information related to a research them, the total research investment A, and the total At of investment distributions made by investors;

a step in which the processing section reads each information corresponding to investor identification information from investment-information data base having stored, for each investor identification information, investment-content information which includes the identification information of a research theme in which investment is to be made and the amount of investment;

a step in which the processing section calculates the total investment Ts made by investors for the identification information of each research theme to which a profit is to be distributed, according to the investment-content information read from the investment-information data base correspondingly to the investor identification information;

a step in which the processing section distributes, to research-theme identification information, the whole consideration L for research and development and/or a business income profit P included in the income information recorded in the research-money-balance information read from the storage section, according to the ratio of the total At of investment distributions or the total investment Ts to the total research investment A, and calculates dividends to all investors for the research-theme identification information;

a step in which the processing section stores the calculated dividends to all investors in association with the research-theme identification information in the storage section; and

a step in which the processing section distributes the dividends to all investors read from the storage section to each investor identification information according to the amount of investment corresponding to the investor identification information read from the investment-information data base, and stores the distributed dividend in the investment-information data base correspondingly to each investor identification information.

**18.** A research-and-development securities selling program which makes a computer execute each of steps wherein;

a step in which a processing section reads each information corresponding to research-theme identification information from a storage section having stored, for each research-theme identification information, research-money-balance information which includes income information and expense information related to a research them, the total research investment A, and the total At of investment distributions made by investors;

a step in which the processing section reads each information corresponding to investor identification information from investment-information data base having stored, for each investor identification information, investment-content information which includes the identification information of a research theme in which investment is to be made and the amount of investment;

a step in which the processing section reads each information corresponding to the investment-set identification information from disclosure-information data base having stored disclosure information which includes research-group identification information, a plurality of pieces of research-theme identification information, and a plurality of pieces of research-theme information for the investment-set identification information;

a step in which the processing section calculates the total investment Ts made by investors for the each investment set identification information to which a profit is to be distributed, according to the investment-content information read from the investment-information data base correspondingly to the investor identification information, and the disclosure information read from the disclosure-information data base;

a step in which the processing section distributes, to each research-theme identification information included in an investment set specified by the investment-set identification information according to information read from the investment-information data base, the whole consideration L for research and development and/or a business income profit P included in the income information recorded in the research-money-balance information read from the storage section and the total research investment A according to the ratio of the total At of investment distributions or the total investment Ts to the total research investment A, and calculates dividends to all investors for the research-theme identification information;

a step in which the processing section stores the calculated dividends to all investors in association with each research theme included in the investment set, in the storage section;

a step in which the processing section totals the dividends to all investors for all research themes included in the investment set according to information read from the storage section to obtain the total amount S of dividends to investors for the investment-set identification information;

a step in which the processing section obtains a dividend to each investor from the total amount S of dividends to all investors according to the ratio of the amount T of investment of the investor identification information to the total investment Ts made by all investors, for each investment set; and

a step in which the processing section stores the calculated dividend to each investor in the investment-information data base corresponding to the investor identification information in the investment-information data base.

19. A computer-readable recording medium having a research-and-development securities selling program stored thereon;

where the program makes the computer execute steps wherein;

a step in which a processing section reads each information corresponding to research-theme identification information from a storage section having stored for each research-theme identification information, research-plan information which includes research-group identification information and research-budget information, research-result information which includes patent information or academic-society-presentation information, research-money-balance information which includes income information and expense information related to the research theme, and expected-result information which includes, income-estimate information other than that of a license fee, the market-value information D of a research target, success-probability information E, and income estimate information;

a step in which the processing section calculates a total research investment A up to now according to the expense information recorded in the research-money-balance information read from the storage section, according to each research-theme identification information;

a step in which the processing section calculates future research investment B by subtracting the total research investment A from the research-budget information recorded in the research-plan information read from the storage section, according to each research-theme identification information;

a step in which the processing section calculates a license fee income estimate H according to the income-estimate information recorded in the expected-result information, according to each research-theme identification information;

a step in which the processing section calculates a risk coefficient I according to the ratio of the amount of expenses which includes the total research investment A and the future research investment B to the amount of income which includes the license fee income estimate H and the income-estimate information other than that of the license fee recorded in the expected-result data, for each research-theme identification information;

a step in which the processing section obtains a profit index R indicating an estimated probability of obtaining a profit when a research theme is reduced to business, according to the ratio of the market-value information D and the success-probability information E recorded in the expected-result information to the risk coefficient I, for each research-theme identification information;

a step in which the processing section ranks a profit-index rank according to the value of the profit index R, for each research-theme identification information; and

a step in which the processing section stores research-theme information which includes the total research investment A, the future research investment B, the risk coefficient I, the profit-index rank, and the research-result information in a research-theme data base in association with the research-theme identification information and discloses the research-theme information through a communication network.

**20.** A computer-readable recording medium having a research-and-development securities selling program stored thereon;

where the program makes the computer execute steps wherein;

a step in which a processing section reads each information corresponding to research-theme identification information from a storage section having stored for each research-theme identification information, research-plan information which includes research-group identification information and research-budget information, research-result information which includes patent information or academic-society-presentation information, research-money-balance information which includes income information and expense information related to the research theme, and expected-result information which includes, income-estimate information other than that of a license fee, the market-value information D of a research target, success-probability information E, and income estimate information;

a step in which the processing section calculates a total research investment A up to now according to the expense information recorded in the research-money-balance information read from the storage section, according to each research-theme identification information;

a step in which the processing section calculates future research investment B by subtracting the total research investment A from the research-budget information recorded in the research-plan information read from the storage section, according to each research-theme identification information;

a step in which the processing section calculates a license fee income estimate H according to the income-estimate information recorded in the expected-result information, according to each research-theme identification information;

a step in which the processing section calculates a risk coefficient I according to the ratio of the amount of expenses which includes the total research investment A and the future research investment B to the amount of income which includes the license fee income estimate H and the income-estimate information other than that of the license fee recorded in the expected-result data, for each research-theme identification information;

a step in which the processing section obtains a profit index R indicating an estimated probability of obtaining a profit when a research theme is reduced to business, according to the ratio of the market-value information D and the success-probability information E recorded in the expected-result information to the risk coefficient I, for each research-theme identification information;

a step in which the processing section ranks a profit-index rank according to the value of the profit index R, for each research-theme identification information;

a step in which the processing section stores research-theme information which includes the total research investment A, the future research investment B, the risk coefficient I, the profit-index rank, and the research-result information in a research-theme data base in association with the research-theme identification information;

a step in which the processing section generates an investment set by selecting a predetermined plurality of pieces of research-theme identification information in an identical research group or similar research groups according to the research-group identification information recorded in the research-plan information read from the storage section, and stores disclosure information which includes the research-group identification information, the plurality of pieces of research-theme identification information, and a plurality of pieces of research-theme information in association with investment-set identification information; and

a step in which the processing section discloses the disclosure information read from the disclosure-information data base through a communication network.

**21.** A computer-readable recording medium having a research-and-development securities selling program stored thereon;

where the program makes the computer execute steps wherein;

a step in which a processing section reads each information corresponding to research-theme identification information from a storage section having stored, for each research-theme identification information, research-money-balance information which includes income information and expense information related to a research them, the total research investment A, and the total At of investment distributions made by investors;

a step in which the processing section reads each information corresponding to investor identification information from investment-information data base having stored, for each investor identification information, investment-content information which includes the identification information of a research theme in which investment is to be made and the amount of investment;

a step in which the processing section calculates the total investment Ts made by investors for the identification information of each research theme to which a profit is to be distributed, according to the investment-content information read from the investment-information data base correspondingly to the investor identification information;

a step in which the processing section distributes, to research-theme identification information, the whole consideration L for research and development and/or a business income profit P included in the income information recorded in the research-money-balance information read from the storage section, according to the ratio of the total At of investment distributions or the total investment Ts to the total research investment A, and calculates dividends to all investors for the research-theme identification information;

a step in which the processing section stores the calculated dividends to all investors in association with the research-theme identification information in the storage section; and

a step in which the processing section distributes the dividends to all investors read from the storage section to each investor identification information according to the amount of investment corresponding to the investor identification information read from the investment-information data base, and stores the distributed dividend in the investment-information data base correspondingly to each investor identification information.

22. A computer-readable recording medium having a research-and-development securities selling program stored thereon;

where the program makes the computer execute steps wherein;

a step in which a processing section reads each information corresponding to research-theme identification information from a storage section having stored, for each research-theme identification information, research-money-balance information which includes income information and expense information related to a research them, the total research investment A, and the total At of investment distributions made by investors;

a step in which the processing section reads each information corresponding to investor identification information from investment-information data base having stored, for each investor identification information, investment-content information which includes the identification information of a research theme in which investment is to be made and the amount of investment;

a step in which the processing section reads each information corresponding to the investment-set identification information from disclosure-information data base having stored disclosure information which includes research-group identification information, a plurality of pieces of research-theme identification information, and a plurality of pieces of research-theme information for the investment-set identification information;

a step in which the processing section calculates the total investment Ts made by investors for the each investment set identification information to which a profit is to be distributed, according to the investment-content information read from the investment-information data base correspondingly to the investor identification information, and the disclosure information read from the disclosure-information data base;

a step in which the processing section distributes, to each research-theme identification information included in an investment set specified by the investment-set identification information according to information read from the investment-information data base, the whole consideration L for research and development and/or a business income profit P included in the income information recorded in the research-money-balance information read from the storage section and the total research investment A according to the ratio of the total At of investment distributions or the total investment Ts to the total research investment A, and calculates dividends to all investors for the research-theme identification information;

a step in which the processing section stores the calculated dividends to all investors in association with each research theme included in the investment set, in the storage section;

a step in which the processing section totals the dividends to all investors for all research themes included in the investment set according to information read from the storage section to obtain the total amount S of dividends to investors for the investment-set identification information;

a step in which the processing section obtains a dividend to each investor from the total amount S of dividends to all investors according to the ratio of the amount T of investment of the investor identification information to the total investment Ts made by all investors, for each investment set; and

a step in which the processing section stores the calculated dividend to each investor in the investment-information data base corresponding to the investor identification information in the investment-information data base.

PROCESSING SECTION **1**

INPUT SECTION **2**

OUTPUT SECTION **3**

DISPLAY SECTION **4**

STORAGE SECTION **6**

RESEARCH-PLAN DATA BASE (RESEARCH-PLAN DB) **61**

RESEARCH-RESULT DB **62**

RESEARCH-MONEY-BALANCE DB **63**

EXPECTED-RESULT DB **64**

INVESTMENT-INFORMATION DB **65**

RESEARCH-THEME-INFORMATION DB **66**

DISCLOSURE-INFORMATION DB **67**

COMMUNICATION-NETWORK CONNECTION SECTION **5**

INVESTOR TERMINAL **7**

NETWORK

GENERAL-PURPOSE DATA BASE **8**

MARKET TREND DB **81**

PATENT-OFFICE ELECTRONIC LIBRARY DB **82**

PATENT-VALUE EVALUATION DB **83**

COMPANY INFORMATION DB **84**

# FIG. 1

**(a)** 61

**RESEARCH-PLAN DB**

RESEARCH THEME
RESEARCH UNIT
RESEARCH GROUP
NAMES OF RESEARCHERS
RESEARCH PERIOD
WHETHER JOINT RESEARCH
 IS PERFORMED
JOINT RESEARCH PARTNER
RESEARCH TARGET
RESEARCH BUDGET

**(b)** 62

**RESEARCH-RESULT DB**

RESEARCH THEME
PATENT APPLICATIONS
PRESENTATIONS IN
 ACADEMIC SOCIETY
BOOK PUBLICATIONS
ANNOUNCEMENTS ON
 NEWSPAPERS AND TV
 PROGRAMS

**(c)** 63

**EXPECTED-RESULT DB**

RESEARCH THEME
RESEARCH TARGET
MARKET VALUE OF RESEARCH
 TARGET
BUSINESS SALES ESTIMATE (C)
MARKET VALUE (D) OF RESEARCH
 RESULT
SUCCESS PROBABILITY (E)
INCOME ESTIMATE (F) FOR
 INFORMATION DISCLOSURE CHARGE
INCOME ESTIMATE (G) FOR OPTIONAL
 CHARGE
ROYALTY ESTIMATE (R)
LUMP-SUM-PAYMENT ESTIMATE (Ls)
LICENSE FEE INCOME ESTIMATE (H)
RISK COEFFICIENT (I)
BUSINESS PLAN
BUSINESS BALANCE ESTIMATE (J)
DIVIDEND ESTIMATE (K)
PROFIT INDEX (R)
PROFIT-INDEX RANK (Br : 1 TO 5)

**FIG. 2**

64

RESEARCH-MONEY-
BALANCE DB

RESEARCH THEME

RESEARCH-START DATE AND TIME
SCHEDULED RESEARCH-END DATE AND TIME
RESEARCH MAN-HOUR VALUE
UNIT LABOR COST
RESEARCH-THEME EXPENSE AND FACILITY EXPENSE
JOINT-RESEARCH EXPENSE
TOTAL RESEARCH-AND-DEVELOPMENT INVESTMENT
  (A) UP TO NOW
FUTURE RESEARCH INVESTMENT (B)
INFORMATION-DISCLOSURE INCOME (LA)
OPTIONAL-CONTRACT INCOME (LB)
LICENSE FEE INCOME (LC)
WHOLE CONSIDERATION (L) FOR RESEARCH AND
  DEVELOPMENT
BUSINESS INCOME PROFIT (P)
BUSINESS-INCOME-PROFIT DIVIDEND RATE (Q)
BUSINESS-INCOME DIVIDEND (X)
DISTRIBUTION RATE (Y) FOR
  RESEARCH-AND-DEVELOPMENT-INVESTMENT
  INTERMEDIARY ORGANIZATION
DIVIDEND (Dt) TO
  RESEARCH-AND-DEVELOPMENT-INVESTMENT
  INTERMEDIARY ORGANIZATION
DIVIDEND (Dr) TO RESEARCH ORGANIZATION
DIVIDEND (Di) TO ALL INVESTORS
TOTAL INVESTMENT DISTRIBUTION (AT) MADE BY
  INVESTORS

FIG. 3

65

INVESTMENT-
INFORMATION DB

INVESTOR ID
PASSWORD
NAME
ADDRESS
TELEPHONE NUMBER
E-MAIL ADDRESS

INVESTMENT SET ID 1
AMOUNT (T) OF INVESTMENT
INVESTMENT PERIOD
INVESTOR DIVIDEND (Dp)

INVESTMENT SET ID 2
AMOUNT (T) OF INVESTMENT
INVESTMENT PERIOD
INVESTOR DIVIDEND (DP)

.
.
.

# FIG. 4

64

RESEARCH-THEME-
INFORMATION DB

RESEARCH THEME
RESEARCH GROUP
RESEARCH PERIOD
JOINT-RESEARCH PARTNER
RESEARCH TARGET
RESEARCH BUDGET
TOTAL RESEARCH-AND-DEVELOPMENT INVESTMENT
  (A) UP TO NOW
FUTURE RESEARCH INVESTMENT (B)
PATENT APPLICATIONS
PRESENTATIONS IN ACADEMIC SOCIETY
BUSINESS SALES ESTIMATE (C)
MARKET VALUE (D)
SUCCESS PROBABILITY (E)
INCOME ESTIMATE (F) FOR INFORMATION DISCLOSURE
  CHARGE
INCOME ESTIMATE (G) FOR OPTIONAL CHARGE
LICENSE FEE INCOME ESTIMATE (H)
RISK COEFFICIENT (I)
BUSINESS PLAN
BUSINESS BALANCE ESTIMATE (J)
DIVIDEND ESTIMATE (K)
PROFIT INDEX (R)
PROFIT-INDEX RANK (Br : 1 TO 5)

# FIG. 5

**67**

**DISCLOSURE-INFORMATION DB**

INVESTMENT-SET ID
RESEARCH GROUP

RESEARCH-THEME INFORMATION 1

RESEARCH-THEME INFORMATION 2

RESEARCH-THEME INFORMATION 3

RESEARCH-THEME INFORMATION 4

RESEARCH-THEME INFORMATION 5

RESEARCH-THEME INFORMATION 6

RESEARCH-THEME INFORMATION 7

RESEARCH-THEME INFORMATION 8

RESEARCH-THEME INFORMATION 9

RESEARCH-THEME INFORMATION 10

TOTAL INVESTMENT $T_S$ MADE BY INVESTORS

**67−1**

RESEARCH THEME
RESEARCH GROUP
RESEARCH PERIOD
JOINT-RESEARCH PARTNER
RESEARCH TARGET
RESEARCH BUDGET
TOTAL RESEARCH-AND-DEVELOPMENT INVESTMENT (A) UP TO NOW
FUTURE RESEARCH INVESTMENT (B)
PATENT APPLICATIONS
PRESENTATIONS IN ACADEMIC SOCIETY
BUSINESS SALES ESTIMATE (C)
MARKET VALUE (D)
SUCCESS PROBABILITY (E)
INCOME ESTIMATE (F) FOR INFORMATION DISCLOSURE CHARGE
INCOME ESTIMATE (G) FOR OPTIONAL CHARGE
LICENSE FEE INCOME ESTIMATE (H)
RISK COEFFICIENT (I)
BUSINESS PLAN
BUSINESS BALANCE ESTIMATE (J)
DIVIDEND ESTIMATE (K)
PROFIT INDEX (R)
PROFIT-INDEX RANK (Br : 1 TO 5)

# FIG. 6

START

SELECT THEME — S101

INPUT RESEARCH-PLAN DATA — S103

INPUT RESEARCH-RESULT DATA — S105

INPUT RESEARCH-MONEY-BALANCE DATA — S107

INPUT EXPECTED-RESULT DATA — S109

CALCULATE EXPENSES A AND B — S111

INCOME ESTIMATE H AND RISK COEFFICIENT I — S113

PROFIT INDEX R AND RANKING — S115

STORE INFORMATION IN RESEARCH-THEME DB — S117

HAS PROCESSING FINISHED FOR ALL RESEARCH THEMES? — S119

NO

YES

GENERATE INVESTMENT SETS — S121

INVESTMENT SET A

RESEARCH THEME 1

DISCLOSE TO INVESTORS — S123

END

FIG. 7

START

NEW
REGISTRATION? — S201

NO

YES

INPUT INVESTOR
INFORMATION — S203

ISSUE INVESTOR ID
AND PASSWORD — S205

REGISTER
INVESTOR — S207

INPUT INVESTMENT
INFORMATION — S209

AUTHENTICATE
INVESTOR — S211

AUTHENTICATION
OK? — S213

NO

YES

ACCEPT
INVESTMENT — S215

ISSUE RESEARCH-AND
-DEVELOPMENT
INVESTMENT SECURITY — S217

END

FIG. 8

START

SELECT INVESTMENT SET — S301

INPUT AMOUNT T OF INVESTMENT — S302

TOTAL AMOUNT Ts OF INVESTMENTS OF INVESTORS — S303

SELECT THEME — S305

INPUT RESEARCH-MONEY-BALANCE DATA — S307

CALCULATE INCOME L AND X — S309

INCOME TYPE — S311

CONSIDERATION          BUSINESS INCOME

S313 — DISTRIBUTION PROCESS 1          DISTRIBUTION PROCESS 2 — S315

STORE DIVIDENDS IN BALANCE DB — S317

TOTAL AMOUNT S OF DIVIDENDS TO ALL INVESTORS — S319

FINISHED FOR ALL THEMES? — S321    NO

YES

DIVIDEND TO EACH INVESTOR — S323

FINISHED FOR ALL INVESTORS? — S325    NO

YES

FINISHED FOR ALL SETS — S327    NO

YES

END

FIG. 9

65—1

INVESTMENT-
INFORMATION DB

INVESTOR ID
PASSWORD
NAME
ADDRESS
TELEPHONE NUMBER
E-MAIL ADDRESS

RESEARCH THEME 1
AMOUNT (T) OF INVESTMENT
INVESTMENT PERIOD
INVESTOR DIVIDEND (Dp)

RESEARCH THEME 2
AMOUNT (T) OF INVESTMENT
INVESTMENT PERIOD
INVESTOR DIVIDEND (DP)

.
.
.

FIG. 10

START

↓ S101

SELECT THEME

↓ S103

INPUT RESEARCH-PLAN DATA

↓ S105

INPUT RESEARCH-RESULT DATA

↓ S107

INPUT RESEARCH-MONEY-BALANCE DATA

↓ S109

INPUT EXPECTED-RESULT DATA

↓ S111

CALCULATE EXPENSES A AND B

↓ S113

INCOME ESTIMATE H AND RISK COEFFICIENT I

↓ S115

PROFIT INDEX R AND RANKING

↓ S117

STORE INFORMATION IN RESEARCH-THEME DB

↓ S1231

DISCLOSE TO INVESTORS

↓

END

# FIG. 11

**FIG. 12**

START

SELECT INVESTMENT SET — S3011

INPUT AMOUNT T OF INVESTMENT — S302

TOTAL AMOUNT Ts OF INVESTMENTS OF INVESTORS — S3031

INPUT RESEARCH-MONEY-BALANCE DATA — S307

CALCULATE INCOME L AND X — S309

INCOME TYPE — S311

CONSIDERATION

BUSINESS INCOME

S313 — DISTRIBUTION PROCESS 1

DISTRIBUTION PROCESS 2 — S3151

STORE DIVIDENDS IN BALANCE DB — S317

DIVIDEND TO EACH INVESTOR — S3231

FINISHED FOR ALL INVESTORS? — S3251    NO

END

FIG. 13

# EP 1 536 355 A1

<table>
<tr><td colspan="2" align="center"><strong>INTERNATIONAL SEARCH REPORT</strong></td><td>International application No.<br>PCT/JP03/08115</td></tr>
</table>

| A. CLASSIFICATION OF SUBJECT MATTER |
|---|
| Int.Cl$^7$ G06F17/60 |

According to International Patent Classification (IPC) or to both national classification and IPC

| B. FIELDS SEARCHED |
|---|
| Minimum documentation searched (classification system followed by classification symbols)<br> Int.Cl$^7$ G06F17/60 |

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)
 JICST FILE(JOIS), WPI, INSPEC(DIALOG)

## C. DOCUMENTS CONSIDERED TO BE RELEVANT

| Category* | Citation of document, with indication, where appropriate, of the relevant passages | Relevant to claim No. |
|---|---|---|
| Y | JP 2002-189825 A (Hitachi, Ltd.), 05 July, 2002 (05.07.02), Full text; Figs. 1 to 6 (Family: none) | 1-22 |
| Y | JP 2002-133109 A (Intellectual Asset Management Ltd.), 10 May, 2002 (10.05.02), Full text; Figs. 1 to 8 (Family: none) | 1-22 |
| Y | JP 2002-163449 A (World Business Management Kabushiki Kaisha), 07 June 2002 (07.06.02), Full text; Figs. 1 to 8 (Family: none) | 1-22 |

| ☒ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br> 25 July, 2003 (25.07.03) | Date of mailing of the international search report<br> 05 August, 2003 (05.08.03) |
|---|---|
| Name and mailing address of the ISA/<br> Japanese Patent Office | Authorized officer |
| Facsimile No. | Telephone No. |

Form PCT/ISA/210 (second sheet) (July 1998)

42

**INTERNATIONAL SEARCH REPORT**

International application No.

PCT/JP03/08115

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2001-338128 A (Sony Corp.),<br>07 December, 2001 (07.12.01),<br>Full text; Figs. 1 to 7<br>(Family: none) | 1-22 |
| Y | JP 2002-024612 A (Sony Corp.),<br>25 January, 2002 (25.01.02),<br>Full text; Figs. 1 to 14<br>(Family: none) | 1-22 |

Form PCT/ISA/210 (continuation of second sheet) (July 1998)